(19) Europäisches Patentamt / European Patent Office / Office européen des brevets

(11) **EP 4 545 499 A1**

(12) **EUROPEAN PATENT APPLICATION**
published in accordance with Art. 153(4) EPC

(43) Date of publication:
**30.04.2025 Bulletin 2025/18**

(21) Application number: **23826015.2**

(22) Date of filing: **12.05.2023**

(51) International Patent Classification (IPC):
*C03C 10/04* (2006.01)    *C03C 10/12* (2006.01)

(52) Cooperative Patent Classification (CPC):
Y02P 40/57

(86) International application number:
**PCT/CN2023/093852**

(87) International publication number:
**WO 2023/246365 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022   CN 202210722730**

(71) Applicant: CDGM Glass Co. Ltd.
Chengdu, Sichuan 610100 (CN)

(72) Inventors:
• YUAN, Baoping
Chengdu, Sichuan 610100 (CN)
• LI, Sai
Chengdu, Sichuan 610100 (CN)
• YU, Tianlai
Chengdu, Sichuan 610100 (CN)
• MO, Dahong
Chengdu, Sichuan 610100 (CN)
• SU, Yong
Chengdu, Sichuan 610100 (CN)
• ZHANG, Ying
Chengdu, Sichuan 610100 (CN)

(74) Representative: Bandpay & Greuter
11 rue Christophe Colomb
75008 Paris (FR)

(54) **GLASS CERAMIC AND MANUFACTURING METHOD THEREFOR, AND GLASS CERAMIC PRODUCT AND MANUFACTURING METHOD THEREFOR**

(57)    The present invention provides a microcrystalline glass and microcrystalline glass product with excellent mechanic performance and lower haze. The microcrystalline glass product, wherein components thereof are represented by weight percentage, comprises: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$, wherein $(SiO_2+Li_2O)/(ZrO_2+P_2O_5)$ is 4.0-15.5. Through rational component design, the microcrystalline glass or microcrystalline glass product obtained by the present invention has excellent mechanic performance and lower haze, so as to be applicable for display devices or electronic devices with higher optical performance requirements.

EP 4 545 499 A1

**Description**

**Technical Field**

The present invention relates to a microcrystalline glass, in particular to a microcrystalline glass and microcrystalline glass product with excellent mechanic performance and lower haze, and manufacturing method thereof.

**Background**

In recent years, microcrystalline glass has been commonly used in various displays of many electronic products and display devices, such as mobile phone, music player, e-book reader, notepad, tablet, laptop, ATM and other similar devices. The materials used to form housings of the display devices and electronic devices are usually selected to meet the mechanical requirements associated with the end use of the electronic devices. On the other hand, electronic devices or display devices pose higher requirements on optical performance of the microcrystalline glass used therein. The optical performance refers to the performance of a substance when absorbing, reflecting and refracting light, such as haze, B value, and refractive index. However, the currently marketable microcrystalline glass has high haze, which is difficult to be applied to display devices or electronic devices with high optical performance requirements.

Therefore, the aim of scientific and technical personnel is to develop microcrystalline glass and microcrystalline glass product with excellent mechanical performance and lower haze that are applicable for display devices or electronic devices.

**Summary**

The technical problem to be solved by the present invention is to provide a microcrystalline glass and microcrystalline glass product with excellent mechanic performance and lower haze.

To solve the technical problem, the technical scheme of the present invention provides:

(1) A microcrystalline glass product, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$, wherein $(SiO_2+Li_2O)/(ZrO_2+P_2O_5)$ is 4.0-15.5.

(2) A microcrystalline glass product, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$.

(3) The microcrystalline glass product according to (1) or (2), wherein components thereof are represented by weight percentage, further comprising: 0-2% of ZnO; and/or 0-2% of MgO; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

(4) A microcrystalline glass product, comprising $SiO_2$, $Al_2O_3$, $Li_2O$, $Na_2O$, $P_2O_5$, and $ZrO_2$, wherein components thereof are represented by weight percentage, $(SiO_2+Li_2O)/(ZrO_2+P_2O_5)$ is 4.0-15.5, and haze of the microcrystalline glass product with a thickness of below 1mm is below 0.2%.

(5) A microcrystalline glass product, comprising $SiO_2$, $Al_2O_3$, $Li_2O$, $Na_2O$, and $ZrO_2$, wherein the microcrystalline glass product comprises lithium silicate crystalline phase, and the lithium silicate crystalline phase has a higher weight percentage than other crystalline phases.

(6) A microcrystalline glass product, comprising $SiO_2$, $Al_2O_3$, $Li_2O$, $Na_2O$, and $ZrO_2$, wherein the microcrystalline glass product comprises lithium monosilicate crystalline phase.

(7) The microcrystalline glass product according to any of (4)-(6), wherein components thereof are represented by weight percentage, comprising: 60-80% of $SiO_2$; and/or 3-15% of $Al_2O_3$; and/or greater than or equal to 5% but less than 10% of $Li_2O$; and/or 4-8% of $Na_2O$; and/or 0.5-5% of $P_2O_5$; and/or greater than 5% but less than or equal to 15% of $ZrO_2$; and/or 0-2% of ZnO; and/or 0-2% of MgO; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

(8) A microcrystalline glass product, wherein components thereof are represented by weight percentage, consisting of: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$; 0-2% of ZnO; 0-2% of MgO; 0-4% of $B_2O_3$; 0-3% of $K_2O$; 0-2% of $Ln_2O_3$; 0-2% of clarifying agent, and the $Ln_2O_3$ is one or more of $La_2O_3$, $Gd_2O_3$, $Y_2O_3$, and $Yb_2O_3$.

(9) The microcrystalline glass product according to any of (1)-(8), wherein components thereof are represented by weight percentage, and one or more of the following 5 conditions are satisfied:

1) $SiO_2/ZrO_2$ is 5.0-15.0, $SiO_2/ZrO_2$ is preferably 6.0-13.0, $SiO_2/ZrO_2$ is more preferably 6.5-12.0, and $SiO_2/ZrO_2$ is further preferably 7.0-11.0;

2) $(SiO_2+Li_2O)/(ZrO_2+P_2O_5)$ is 5.0-13.5, $(SiO_2+Li_2O)/(ZrO_2+P_2O_5)$ is preferably 6.0-11.5, $(SiO_2+Li_2O)/(ZrO_2+P_2O_5)$ is more preferably 6.0-10.5;

3) $(SiO_2+Al_2O_3+Na_2O)/Li_2O$ is 7.0-18.0, $(SiO_2+Al_2O_3+Na_2O)/Li_2O$ is preferably 7.5-15.0, $(SiO_2+Al_2O_3+Na_2O)/Li_2O$ is more preferably 8.5-13.0, $(SiO_2+Al_2O_3+Na_2O)/Li_2O$ is further preferably 8.5-11.0;

4) $(ZrO_2+Al_2O_3)/Li_2O$ is 0.85-5.0, $(ZrO_2+Al_2O_3)/Li_2O$ is preferably 0.9-4.0, and $(ZrO_2+Al_2O_3)/Li_2O$ is more preferably 1.0-3.5, $(ZrO_2+Al_2O_3)/Li_2O$ is further preferably 1.0-3.0;

5) $(Li_2O+Na_2O)/(SiO_2+ZrO_2)$ is 0.10-0.27, $(Li_2O+Na_2O)/(SiO_2+ZrO_2)$ is preferably 0.12-0.25, $(Li_2O+Na_2O)/(SiO_2+ZrO_2)$ is more preferably 0.14-0.25, $(Li_2O+Na_2O)/(SiO_2+ZrO_2)$ is further preferably 0.15-0.23.

(10) The microcrystalline glass product according to any of (1)-(8), wherein components thereof are represented by weight percentage, comprising: 62-78% of $SiO_2$, preferably 64-75% of $SiO_2$; and/or 5-12% of $Al_2O_3$, preferably 5-10% of $Al_2O_3$; and/or greater than or equal to 6% but less than 10% of $Li_2O$; and/or 4-7.5% of $Na_2O$, preferably 4.5-7% of $Na_2O$; and/or 1-4.5% of $P_2O_5$, preferably 1.5-4% of $P_2O_5$; and/or 5.5-13% of $ZrO_2$, preferably 6-12% of $ZrO_2$; and/or 0-1.5% of $ZnO$, preferably 0-1% of $ZnO$; and/or 0-1.5% of $MgO$, preferably 0-1% of $MgO$; and/or 0-3% of $B_2O_3$, preferably 0-2% of $B_2O_3$; and/or 0-2% of $K_2O$, preferably 0-1% of $K_2O$; and/or 0-1% of $Ln_2O_3$, preferably 0-0.5% of $Ln_2O_3$; and/or 0-1% of clarifying agent, preferably 0-0.5% of clarifying agent, and the $Ln_2O_3$ is one or more of $La_2O_3$, $Gd_2O_3$, $Y_2O_3$, and $Yb_2O_3$.

(11) The microcrystalline glass product according to any of (1)-(8), wherein the microcrystalline glass product comprises lithium silicate crystalline phase, the lithium silicate crystalline phase has a higher weight percentage than other crystalline phases, preferably the lithium silicate crystalline phase accounts for 5-50% of the microcrystalline glass product by weight percentage, more preferably the lithium silicate crystalline phase accounts for 5-40% of the microcrystalline glass product by weight percentage, further preferably the lithium silicate crystalline phase accounts for 10-30% of the microcrystalline glass product by weight percentage.

(12) The microcrystalline glass product according to any of (1)-(8), wherein the microcrystalline glass product comprises lithium monosilicate crystalline phase, the lithium monosilicate crystalline phase has a higher weight percentage than other crystalline phases, preferably the lithium monosilicate crystalline phase accounts for 5-50% of the microcrystalline glass product by weight percentage, more preferably the lithium monosilicate crystalline phase accounts for 5-40% of the microcrystalline glass product by weight percentage, further preferably the lithium monosilicate crystalline phase accounts for 10-30% of the microcrystalline glass product by weight percentage.

(13) The microcrystalline glass product according to any of (1)-(8), wherein the microcrystalline glass product comprises lithium disilicate crystalline phase, the lithium disilicate crystalline phase accounts for below 20% of the microcrystalline glass product by weight percentage, preferably the lithium disilicate crystalline phase accounts for below 10% of the microcrystalline glass product by weight percentage, more preferably the lithium disilicate crystalline phase accounts for below 5% of the microcrystalline glass product by weight percentage, further preferably the lithium disilicate crystalline phase is not contained.

(14) The microcrystalline glass product according to any of (1)-(8), wherein the microcrystalline glass product comprises petalite crystalline phase, the petalite crystalline phase accounts for below 15% of the microcrystalline glass product by weight percentage, preferably the petalite crystalline phase accounts for below 10% of the microcrystalline glass product by weight percentage, more preferably the petalite crystalline phase accounts for below 5% of the microcrystalline glass product by weight percentage, further preferably the petalite crystalline phase is not contained.

(15) The microcrystalline glass product according to any of (1)-(8), wherein falling ball test height of the microcrystalline glass product is above 1400mm, preferably above 1500mm, more preferably above 1600mm; and/or fracture toughness is above $1MPa \cdot m^{1/2}$, preferably above $1.1MPa \cdot m^{1/2}$, more preferably above $1.2MPa \cdot m^{1/2}$; and/or four-point bending strength is above 600MPa, preferably above 650MPa, more preferably above 700MPa; and/or Vickers hardness is above $670kgf/mm^2$, preferably above $680kgf/mm^2$, more preferably above $700kgf/mm^2$; and/or depth of ion exchange layer is above $80\mu m$, preferably above $90\mu m$, more preferably above $100\mu m$; and/or surface stress is above 100MPa, preferably above 150MPa, more preferably above 200MPa; and/or crystallinity is above 10%, preferably above 15%, more preferably above 20%; and/or grain size is below 50nm, preferably below 40nm, more preferably below 30nm; and/or drop resistance is above 1500mm, preferably above 1600mm, more preferably above 1800mm.

(16) The microcrystalline glass product according to any of (1)-(8), wherein the haze of the microcrystalline glass product with a thickness of below 1mm is below 0.2%, preferably below 0.17%, more preferably below 0.15%; and/or average light transmittance at 400-800nm wavelength is above 88.0%, preferably above 89.0%, more preferably above 90.0%, further preferably above 90.5%; and/or light transmittance at 550nm wavelength is above 89.0%, preferably above 90.0%, more preferably above 91.0%, further preferably above 91.5%; and/or average light | B | value at 400-800nm is below 1.0, preferably below 0.9, more preferably below 0.8.

(17) The microcrystalline glass product according to (16), wherein the thickness of the microcrystalline glass product is 0.2-1mm, preferably 0.3-0.9mm, more preferably 0.5-0.8mm, further preferably 0.55mm or 0.6mm or 0.68mm or 0.7mm or 0.75mm.

(18) The microcrystalline glass product according to any of (1)-(7), wherein the microcrystalline glass product comprises colorant.

(19) The microcrystalline glass product according to (18), wherein the colorant is expressed by weight percentage, comprising: 0-4% of $NiO$; and/or 0-4% of $Ni_2O_3$; and/or 0-2% of $CoO$; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

(20) A microcrystalline glass, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$, wherein $(SiO_2+Li_2O)/(ZrO_2+P_2O_5)$ is 4.0-15.5.

(21) A microcrystalline glass, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$.

(22) The microcrystalline glass according to (20) or (21), wherein components thereof are represented by weight percentage, further comprising: 0-2% of $ZnO$; and/or 0-2% of $MgO$; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

(23) A microcrystalline glass, comprising $SiO_2$, $Al_2O_3$, $Li_2O$, $Na_2O$, $P_2O_5$, and $ZrO_2$, wherein components thereof are represented by weight percentage, $(SiO_2+Li_2O)/(ZrO_2+P_2O_5)$ is 4.0-15.5, and haze of the microcrystalline glass with a thickness of below 1mm is below 0.2%.

(24) A microcrystalline glass, comprising $SiO_2$, $Al_2O_3$, $Li_2O$, $Na_2O$, and $ZrO_2$, wherein the microcrystalline glass comprises lithium silicate crystalline phase, and the lithium silicate crystalline phase has a higher weight percentage than other crystalline phases.

(25) A microcrystalline glass, comprising $SiO_2$, $Al_2O_3$, $Li_2O$, $Na_2O$, and $ZrO_2$, wherein the microcrystalline glass comprises lithium monosilicate crystalline phase.

(26) The microcrystalline glass according to any of (23)-(25), wherein components thereof are represented by weight percentage, comprising: 60-80% of $SiO_2$; and/or 3-15% of $Al_2O_3$; and/or greater than or equal to 5% but less than 10% of $Li_2O$; and/or 4-8% of $Na_2O$; and/or 0.5-5% of $P_2O_5$; and/or greater than 5% but less than or equal to 15% of $ZrO_2$; and/or 0-2% of $ZnO$; and/or 0-2% of $MgO$; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

(27) A microcrystalline glass, wherein components thereof are represented by weight percentage, consisting of: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$; 0-2% of $ZnO$; 0-2% of $MgO$; 0-4% of $B_2O_3$; 0-3% of $K_2O$; 0-2% of $Ln_2O_3$; 0-2% of clarifying agent, and the $Ln_2O_3$ is one or more of $La_2O_3$, $Gd_2O_3$, $Y_2O_3$, and $Yb_2O_3$.

(28) The microcrystalline glass according to any of (20)-(27), wherein components thereof are represented by weight percentage, and one or more of the following 5 conditions are satisfied:

1) $SiO_2/ZrO_2$ is 5.0-15.0, $SiO_2/ZrO_2$ is preferably 6.0-13.0, $SiO_2/ZrO_2$ is more preferably 6.5-12.0, and $SiO_2/ZrO_2$ is further preferably 7.0-11.0;

2) $(SiO_2+Li_2O)/(ZrO_2+P_2O_5)$ is 5.0-13.5, $(SiO_2+Li_2O)/(ZrO_2+P_2O_5)$ is preferably 6.0-11.5, $(SiO_2+Li_2O)/(ZrO_2+P_2O_5)$ is more preferably 6.0-10.5;

3) $(SiO_2+Al_2O_3+Na_2O)/Li_2O$ is 7.0-18.0, $(SiO_2+Al_2O_3+Na_2O)/Li_2O$ is preferably 7.5-15.0, $(SiO_2+Al_2O_3+Na_2O)/Li_2O$ is more preferably 8.5-13.0, $(SiO_2+Al_2O_3+Na_2O)/Li_2O$ is further preferably 8.5-11.0;

4) $(ZrO_2+Al_2O_3)/Li_2O$ is 0.85-5.0, $(ZrO_2+Al_2O_3)/Li_2O$ is preferably 0.9-4.0, and $(ZrO_2+Al_2O_3)/Li_2O$ is more preferably 1.0-3.5, $(ZrO_2+Al_2O_3)/Li_2O$ is further preferably 1.0-3.0;

5) $(Li_2O+Na_2O)/(SiO_2+ZrO_2)$ is 0.10-0.27, $(Li_2O+Na_2O)/(SiO_2+ZrO_2)$ is preferably 0.12-0.25, $(Li_2O+Na_2O)/(SiO_2+ZrO_2)$ is more preferably 0.14-0.25, $(Li_2O+Na_2O)/(SiO_2+ZrO_2)$ is further preferably 0.15-0.23.

(29) The microcrystalline glass according to any of (20)-(27), wherein components thereof are represented by weight percentage, comprising: 62-78% of $SiO_2$, preferably 64-75% of $SiO_2$; and/or 5-12% of $Al_2O_3$, preferably 5-10% of $Al_2O_3$; and/or greater than or equal to 6% but less than 10% of $Li_2O$; and/or 4-7.5% of $Na_2O$, preferably 4.5-7% of $Na_2O$; and/or 1-4.5% of $P_2O_5$, preferably 1.5-4% of $P_2O_5$; and/or 5.5-13% of $ZrO_2$, preferably 6-12% of $ZrO_2$; and/or 0-1.5% of $ZnO$, preferably 0-1% of $ZnO$; and/or 0-1.5% of $MgO$, preferably 0-1% of $MgO$; and/or 0-3% of $B_2O_3$, preferably 0-2% of $B_2O_3$; and/or 0-2% of $K_2O$, preferably 0-1% of $K_2O$; and/or 0-1% of $Ln_2O_3$, preferably 0-0.5% of $Ln_2O_3$; and/or 0-1% of clarifying agent, preferably 0-0.5% of clarifying agent, and the $Ln_2O_3$ is one or more of $La_2O_3$, $Gd_2O_3$, $Y_2O_3$, and $Yb_2O_3$.

(30) The microcrystalline glass according to any of (20)-(27), wherein the microcrystalline glass comprises lithium silicate crystalline phase, the lithium silicate crystalline phase has a higher weight percentage than other crystalline phases, preferably the lithium silicate crystalline phase accounts for 5-50% of the microcrystalline glass by weight percentage, more preferably the lithium silicate crystalline phase accounts for 5-40% of the microcrystalline glass by weight percentage, further preferably the lithium silicate crystalline phase accounts for 10-30% of the microcrystalline glass by weight percentage.

(31) The microcrystalline glass according to any of (20)-(27), wherein the microcrystalline glass comprises lithium monosilicate crystalline phase, the lithium monosilicate crystalline phase has a higher weight percentage than other crystalline phases, preferably the lithium monosilicate crystalline phase accounts for 5-50% of the microcrystalline glass by weight percentage, more preferably the lithium monosilicate crystalline phase accounts for 5-40% of the microcrystalline glass by weight percentage, further preferably the lithium monosilicate crystalline phase accounts for 10-30% of the microcrystalline glass by weight percentage.

(32) The microcrystalline glass according to any of (20)-(27), wherein the microcrystalline glass comprises lithium disilicate crystalline phase, the lithium disilicate crystalline phase accounts for below 20% of the microcrystalline glass by weight percentage, preferably the lithium disilicate crystalline phase accounts for below 10% of the microcrystalline glass by weight percentage, more preferably the lithium disilicate crystalline phase accounts for below 5% of the microcrystalline glass by weight percentage, further preferably the lithium disilicate crystalline phase is not contained.

(33) The microcrystalline glass according to any of (20)-(27), wherein the microcrystalline glass comprises petalite crystalline phase, the petalite crystalline phase accounts for below 15% of the microcrystalline glass by weight percentage, preferably the petalite crystalline phase accounts for below 10% of the microcrystalline glass by weight percentage, more preferably the petalite crystalline phase accounts for below 5% of the microcrystalline glass by weight percentage, further preferably the petalite crystalline phase is not contained.

(34) The microcrystalline glass according to any of (20)-(27), wherein crystallinity of the microcrystalline glass is above 10%, preferably above 15%, more preferably above 20%; and/or grain size is below 50nm, preferably below 40nm, more preferably below 30nm; and/or body falling ball height is above 1700mm, preferably above 1900mm, more preferably above 2000mm; and/or Vickers hardness is above 600kgf/mm$^2$, preferably above 620kgf/mm$^2$, more preferably above 630kgf/mm$^2$; and/or refractive index is 1.520-1.545; and/or Young's modulus is 80-100GPa.

(35) The microcrystalline glass according to any of (20)-(27), wherein the haze of the microcrystalline glass with a thickness of below 1mm is below 0.2%, preferably below 0.17%, more preferably below 0.15%; and/or average light transmittance at 400-800nm wavelength is above 88.0%, preferably above 89.0%, more preferably above 90.0%, further preferably above 90.5%; and/or light transmittance at 550nm wavelength is above 89.0%, preferably above 90.0%, more preferably above 91.0%, further preferably above 91.5%; and/or average light |B| value at 400-800nm is below 1.0, preferably below 0.9, more preferably below 0.8.

(36) The microcrystalline glass according to (35), wherein the thickness of the microcrystalline glass is 0.2-1mm, preferably 0.3-0.9mm, more preferably 0.5-0.8mm, further preferably 0.55mm or 0.6mm or 0.68mm or 0.7mm or 0.75mm.

(37) The microcrystalline glass according to any of (20)-(26), wherein the microcrystalline glass comprises colorant.

(38) The microcrystalline glass according to (37), wherein the colorant is expressed by weight percentage, comprising: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

(39) A matrix glass, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$, wherein $(SiO_2+Li_2O)/(ZrO_2+P_2O_5)$ is 4.0-15.5.

(40) A matrix glass, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$.

(41) The matrix glass according to (39) or (40), wherein components thereof are represented by weight percentage, further comprising: 0-2% of ZnO; and/or 0-2% of MgO; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

(42) A matrix glass, wherein components thereof are represented by weight percentage, consisting of: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$; 0-2% of ZnO; 0-2% of MgO; 0-4% of $B_2O_3$; 0-3% of $K_2O$; 0-2% of $Ln_2O_3$; 0-2% of clarifying agent, and the $Ln_2O_3$ is one or more of $La_2O_3$, $Gd_2O_3$, $Y_2O_3$, and $Yb_2O_3$.

(43) The matrix glass according to any of (39)-(42), wherein components thereof are represented by weight percentage, and one or more of the following 5 conditions are satisfied:

1) $SiO_2/ZrO_2$ is 5.0-15.0, $SiO_2/ZrO_2$ is preferably 6.0-13.0, $SiO_2/ZrO_2$ is more preferably 6.5-12.0, and $SiO_2/ZrO_2$ is further preferably 7.0-11.0;

2) $(SiO_2+Li_2O)/(ZrO_2+P_2O_5)$ is 5.0-13.5, $(SiO_2+Li_2O)/(ZrO_2+P_2O_5)$ is preferably 6.0-11.5, $(SiO_2+Li_2O)/(ZrO_2$

$+P_2O_5$) is more preferably 6.0-10.5;

3) $(SiO_2+Al_2O_3+Na_2O)/Li_2O$ is 7.0-18.0, $(SiO_2+Al_2O_3+Na_2O)/Li_2O$ is preferably 7.5-15.0, $(SiO_2+Al_2O_3+Na_2O)/Li_2O$ is more preferably 8.5-13.0, $(SiO_2+Al_2O_3+Na_2O)/Li_2O$ is further preferably 8.5-11.0;

4) $(ZrO_2+Al_2O_3)/Li_2O$ is 0.85-5.0, $(ZrO_2+Al_2O_3)/Li_2O$ is preferably 0.9-4.0, and $(ZrO_2+Al_2O_3)/Li_2O$ is more preferably 1.0-3.5, $(ZrO_2+Al_2O_3)/Li_2O$ is further preferably 1.0-3.0;

5) $(Li_2O+Na_2O)/(SiO_2+ZrO_2)$ is 0.10-0.27, $(Li_2O+Na_2O)/(SiO_2+ZrO_2)$ is preferably 0.12-0.25, $(Li_2O+Na_2O)/(SiO_2+ZrO_2)$ is more preferably 0.14-0.25, $(Li_2O+Na_2O)/(SiO_2+ZrO_2)$ is further preferably 0.15-0.23.

(44) The matrix glass according to any of (39)-(42), wherein components thereof are represented by weight percentage, comprising: 62-78% of $SiO_2$, preferably 64-75% of $SiO_2$; and/or 5-12% of $Al_2O_3$, preferably 5-10% of $Al_2O_3$; and/or greater than or equal to 6% but less than 10% of $Li_2O$; and/or 4-7.5% of $Na_2O$, preferably 4.5-7% of $Na_2O$; and/or 1-4.5% of $P_2O_5$, preferably 1.5-4% of $P_2O_5$; and/or 5.5-13% of $ZrO_2$, preferably 6-12% of $ZrO_2$; and/or 0-1.5% of $ZnO$, preferably 0-1% of $ZnO$; and/or 0-1.5% of $MgO$, preferably 0-1% of $MgO$; and/or 0-3% of $B_2O_3$, preferably 0-2% of $B_2O_3$; and/or 0-2% of $K_2O$, preferably 0-1% of $K_2O$; and/or 0-1% of $Ln_2O_3$, preferably 0-0.5% of $Ln_2O_3$; and/or 0-1% of clarifying agent, preferably 0-0.5% of clarifying agent, and the $Ln_2O_3$ is one or more of $La_2O_3$, $Gd_2O_3$, $Y_2O_3$, and $Yb_2O_3$.

(45) The matrix glass according to any of (39)-(42), wherein refractive index of the matrix glass is 1.510-1.530.

(46) The matrix glass according to any of (39)-(41), wherein the matrix glass comprises colorant.

(47) The matrix glass according to (46), wherein the colorant is expressed by weight percentage, comprising: 0-4% of $NiO$; and/or 0-4% of $Ni_2O_3$; and/or 0-2% of $CoO$; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

(48) A microcrystalline glass former, comprising the microcrystalline glass according to any of (20)-(38).

(49) A glass cover plate, comprising the microcrystalline glass product according to any of (1)-(19), and/or the microcrystalline glass according to any of (20)-(38), and/or the matrix glass according to any of (39)-(47), and/or the microcrystalline glass former according to (48).

(50) A glass component, comprising the microcrystalline glass product according to any of (1)-(19), and/or the microcrystalline glass according to any of (20)-(38), and/or the matrix glass according to any of (39)-(47), and/or the microcrystalline glass former according to (48).

(51) A display device, comprising the microcrystalline glass product according to any of (1)-(19), and/or the microcrystalline glass according to any of (20)-(38), and/or the matrix glass according to any of (39)-(47), and/or the microcrystalline glass former according to (48), and/or the glass cover plate according to (49), and/or the glass component according to (50).

(52) An electronic device, comprising the microcrystalline glass product according to any of (1)-(19), and/or the microcrystalline glass according to any of (20)-(38), and/or the matrix glass according to any of (39)-(47), and/or the microcrystalline glass former according to (48), and/or the glass cover plate according to (49), and/or the glass component according to (50).

(53) A manufacturing method of the microcrystalline glass product according to any of (1)-(19), wherein the method comprises the following steps: forming a matrix glass, forming the matrix glass into a microcrystalline glass through a crystallization process, and then forming the microcrystalline glass into a microcrystalline glass product through a chemical strengthening process.

(54) The manufacturing method of the microcrystalline glass product according to (53), wherein the crystallization process comprises the following steps: heating up to a specified crystallization treatment temperature, holding the temperature for a certain time after reaching the crystallization treatment temperature, and then performing cooling, wherein the crystallization treatment temperature is 550-700°C, preferably 580-650°C, and holding time under the crystallization treatment temperature is 0-8 hours, preferably 1-6 hours.

(55) The manufacturing method of the microcrystalline glass product according to (53), wherein the crystallization process comprises the following steps: performing nucleation process treatment under a first temperature, and then performing crystal growth process treatment under a second temperature that is higher than the nucleation process temperature.

(56) The manufacturing method of the microcrystalline glass product according to (55), wherein the crystallization process comprises the following steps: the first temperature is 450-550°C, and the second temperature is 550-700°C; the holding time under the first temperature is 0-24 hours, preferably 2-15 hours; the holding time under the second temperature is 0-10 hours, preferably 0.5-6 hours.

(57) The manufacturing method of the microcrystalline glass product according to any of (53)-(56), wherein the chemical strengthening process comprises: immersing the microcrystalline glass into a salt bath of molten Na salt at a temperature of 350°C-470°C for 1-36 hours, wherein temperature range is preferably 380°C-460°C, and time range is preferably 2-24 hours; and/or immersing the microcrystalline glass into a salt bath of molten K salt at a temperature of 360°C-450°C for 1-36 hours, wherein the time range is preferably 2-24 hours; and/or immersing the microcrystalline glass into a mixed salt bath of molten K salt and Na salt at a temperature of 360°C-450°C for 1-36 hours, wherein the time range is preferably 2-24 hours.

(58) A manufacturing method of the microcrystalline glass according to any of (20)-(38), wherein the method comprises the following steps: forming a matrix glass, and then forming the matrix glass into a microcrystalline glass through a crystallization process.

(59) The manufacturing method of the microcrystalline glass according to (58), wherein the crystallization process comprises the following steps: heating up to a specified crystallization treatment temperature, holding the temperature for a certain time after reaching the crystallization treatment temperature, and then performing cooling, wherein the crystallization treatment temperature is 550-700°C, preferably 580-650°C, and holding time under the crystallization treatment temperature is 0-8 hours, preferably 1-6 hours.

(60) The manufacturing method of the microcrystalline glass according to (59), wherein the crystallization process comprises the following steps: performing nucleation process treatment under a first temperature, and then performing crystal growth process treatment under a second temperature that is higher than the nucleation process temperature.

(61) The manufacturing method of the microcrystalline glass according to (60), wherein the crystallization process comprises the following steps: the first temperature is 450-550°C, and the second temperature is 550-700°C; the holding time under the first temperature is 0-24 hours, preferably 2-15 hours; the holding time under the second temperature is 0-10 hours, preferably 0.5-6 hours.

(62) A manufacturing method of the microcrystalline glass former according to (48), wherein the method comprises: grinding or polishing the microcrystalline glass into a microcrystalline glass former, or making the matrix glass or microcrystalline glass into the microcrystalline glass former through hot bending process or pressing process at a certain temperature.

(63) The manufacturing method of the microcrystalline glass former according to (62), wherein the method comprises the following steps: performing a crystallization heat treatment process once for the matrix glass, including heating, heat preservation and nucleation, heating, heat preservation and crystallization, cooling to room temperature, and forming a precrystallized glass; and thermally processing the precrystallized glass to obtain the microcrystalline glass former.

(64) The manufacturing method of the microcrystalline glass former according to (62), wherein the method comprises the following steps:

1) heating and warm-up: placing the matrix glass or precrystallized glass or microcrystalline glass into a mould, making the mould pass through each heating site in a hot bending machine successively and stay at each site for a certain time for heat preservation, wherein temperature of warm-up zone is 400-800°C, pressure is 0.01-0.05MPa, and time is 40-200s;

2) pressing: transferring the mould to a molding site after warm-up, wherein the hot bending machine exerts a certain pressure on the mould, pressure range is 0.1-0.8Mpa, temperature range of the molding site is 600-850°C, and molding time range is 40-200s;

3) pressure holding and cooling: transferring the mould to a cooling site to cool down site by site, wherein cooling temperature range is 750-500°C, the pressure is 0.01-0.05Mpa, and the time is 40-200s.

The beneficial effects of the present invention are as follows: through rational component design, the microcrystalline glass or microcrystalline glass product obtained by the present invention has excellent mechanic performance and lower haze, so as to be applicable for display devices or electronic devices with higher optical performance requirements.

## Detailed Description

The microcrystalline glass and microcrystalline glass product provided by the present invention are materials with crystalline phase (sometimes also called crystal) and glass phase, which are different from amorphous solid. The crystalline phase of the microcrystalline glass and microcrystalline glass product can be identified by peak angles appeared in X-ray diffraction pattern of X-ray diffraction analysis and/or measured by TEMEDX.

Through repeated tests and researches, the inventor of the present invention obtains the microcrystalline glass or microcrystalline glass product provided by the present invention at a lower cost by specifying the content and proportion of specific components constituting the microcrystalline glass and microcrystalline glass product as specific values and precipitating specific crystalline phases.

In the following paragraphs, the range of components (ingredients) of the matrix glass, microcrystalline glass and microcrystalline glass product provided by the present invention will be described. If not specified herein, the content of each component is expressed in weight percentage (wt%) relative to the total content of the matrix glass or microcrystalline glass or microcrystalline glass product converted into oxide composition. "Converted into oxide composition" therein refers to that the total content of this oxide is taken as 100% when the oxide, compound salt and hydroxide, used as raw materials for the composition of the matrix glass, microcrystalline glass or microcrystalline glass product provided by the present invention, are decomposed and transformed into oxides during melting. In addition, in this description, only the matrix glass before crystallization (i.e., crystallization process treatment) is referred to as glass, the crystallized (i.e., crystallization process treatment) matrix glass is referred to as microcrystalline glass, and the microcrystalline glass product refers to that obtained by chemical strengthening of the microcrystalline glass.

Unless otherwise noted in specific circumstances, the numerical range listed herein includes upper and lower limits, and the words "above" and "below" include the endpoint values as well as all integers and fractions within the range, but not limited to the specific values listed when the range is limited. The term "about" as used herein refers to that formulations, parameters and other quantities as well as characteristics are not, and do not need to be, accurate, and may be approximate and/or greater or lower if necessary, reflecting tolerances, conversion factors, measurement errors, etc. "And/or" mentioned herein is inclusive. For example, "A; and/or B" refers to only A, or only B, or both A and B.

In some embodiments of the present invention, the crystalline phase in the microcrystalline glass or microcrystalline glass product comprises lithium silicate crystalline phase (one or more of lithium monosilicate or lithium disilicate). In some embodiments, the lithium silicate crystalline phase has a higher weight percentage than other crystalline phases. In some embodiments, the lithium silicate crystalline phase accounts for 5-50% of the microcrystalline glass or microcrystalline glass product by weight percentage, preferably the lithium silicate crystalline phase accounts for 5-40% of the microcrystalline glass or microcrystalline glass product by weight percentage, more preferably the lithium silicate crystalline phase accounts for 10-30% of the microcrystalline glass or microcrystalline glass product by weight percentage. In some embodiments, the lithium silicate crystalline phase accounts for 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% and 50% of the microcrystalline glass or microcrystalline glass product by weight percentage.

In some embodiments of the present invention, the crystalline phase in the microcrystalline glass or microcrystalline glass product comprises lithium monosilicate crystalline phase. In some embodiments, the lithium monosilicate crystalline phase has a higher weight percentage than other crystalline phases. In some embodiments, the lithium monosilicate crystalline phase accounts for 5-50% of the microcrystalline glass or microcrystalline glass product by weight percentage, preferably the lithium monosilicate crystalline phase accounts for 5-40% of the microcrystalline glass or microcrystalline glass product by weight percentage, more preferably the lithium monosilicate crystalline phase accounts for 10-30% of the microcrystalline glass or microcrystalline glass product by weight percentage. In some embodiments, the lithium monosilicate crystalline phase accounts for 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% and 50% of the microcrystalline glass or microcrystalline glass product by weight percentage.

In some embodiments of the present invention, the crystalline phase in the microcrystalline glass or microcrystalline glass product comprises lithium disilicate crystalline phase. In some embodiments, the lithium disilicate crystalline phase accounts for below 20% of the microcrystalline glass or microcrystalline glass product by weight percentage, preferably the lithium disilicate crystalline phase accounts for below 10% of the microcrystalline glass or microcrystalline glass product by weight percentage, more preferably the lithium disilicate crystalline phase accounts for below 5% of the microcrystalline glass or microcrystalline glass product by weight percentage, further preferably the lithium disilicate crystalline phase is not contained in the microcrystalline glass or microcrystalline glass product. In some embodiments, the lithium disilicate crystalline phase accounts for 0%, greater than 0%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5% and 20% of the microcrystalline glass or microcrystalline glass product by weight percentage.

In some embodiments of the present invention, the crystalline phase in the microcrystalline glass or microcrystalline glass product comprises petalite crystalline phase, the petalite crystalline phase accounts for below 15% of the microcrystalline glass or microcrystalline glass product by weight percentage, preferably the petalite crystalline phase accounts for below 10% of the microcrystalline glass or microcrystalline glass product by weight percentage, more preferably the petalite crystalline phase accounts for below 5% of the microcrystalline glass or microcrystalline glass product by weight percentage, further preferably the petalite crystalline phase is not contained in the microcrystalline glass or microcrystalline glass product. In some embodiments, the petalite crystalline phase accounts for 0%, greater than 0%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5% and 15% of the microcrystalline glass or microcrystalline glass product by weight percentage.

$SiO_2$, as a basic component of the glass, microcrystalline glass and microcrystalline glass product provided by the present invention, is one of the components forming the lithium silicate crystalline phase. If the content of $SiO_2$ is below

60%, the crystal is easy to become coarse in the microcrystalline glass, which affects the light transmittance of the microcrystalline glass and microcrystalline glass product. Therefore, the lower limit of the $SiO_2$ content is 60%, preferably 62%, more preferably 64%. If the content of $SiO_2$ is above 80%, the glass melting temperature is high, resulting in material melting difficulties, and the haze of the microcrystalline glass and microcrystalline glass product increases. Therefore, the upper limit of the content of $SiO_2$ is 80%, preferably 78%, more preferably 75%. In some embodiments, it can comprise about 60%, 60.5%, 61%, 61.5%, 62%, 62.5%, 63%, 63.5%, 64%, 64.5%, 65%, 65.5%, 66%, 66.5%, 67%, 67.5%, 68%, 68.5%, 69%, 69.5%, 70%, 70.5%, 71%, 71.5%, 72%, 72.5%, 73%, 73.5%, 74%, 74.5%, 75%, 75.5%, 76%, 76.5%, 77%, 77.5%, 78%, 78.5%, 79%, 79.5% and 80% of $SiO_2$.

$Al_2O_3$, as a component that forms a glass network structure, is conducive to the chemical strengthening of the microcrystalline glass, and can improve the drop resistance of the microcrystalline glass product. If the content of $Al_2O_3$ is less than 3%, the above effect does not work well. Therefore, the lower limit of the $Al_2O_3$ content is 3%, preferably 5%. On the other hand, if the content of $Al_2O_3$ exceeds 15%, the broken fragments of the microcrystalline glass product obtained after chemical strengthening of microcrystalline glass are small (generally in a granular form), which is not conducive to continued use. Therefore, the upper limit of the content of $Al_2O_3$ is 15%, preferably 12%, more preferably 10%. In some embodiments, it can comprise about 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5% and 15% of $Al_2O_3$.

$Li_2O$ is a necessary component for the microcrystalline glass provided by the present invention to form the crystalline phase, and is also a necessary component for chemical strengthening. However, if the content of $Li_2O$ is less than 5%, the type of crystal formation changes, which affects the strength of the microcrystalline glass and microcrystalline glass product. Therefore, the lower limit of the $Li_2O$ content is 5%, preferably 6%. On the other hand, if excessive $Li_2O$ is contained, the haze of the microcrystalline glass and microcrystalline glass product rises, and the raw material cost is higher. Therefore, the upper limit of $Li_2O$ content is less than 10%. In some embodiments, it can comprise about 5%, 5.5%, 6%, 6.5%, 7%, 7.5%, 8%, 8.5%, 9%, 9.5%, 9.8% and less than 10% of $Li_2O$.

$Na_2O$ is conductive to the formation of lithium monosilicate crystalline phase in the microcrystalline glass, and can improve the chemical stability after chemical strengthening of microcrystalline glass. The present invention achieves the above effect by comprising above 4% of $Na_2O$, preferably comprising above 4.5% of $Na_2O$. However, if excessive $Na_2O$ is contained, it is difficult to form lithium monosilicate crystalline phase in the microcrystalline glass, which affects the light transmittance of the microcrystalline glass and microcrystalline glass product. Therefore, the upper limit of the content of $Na_2O$ is 8%, preferably 7.5%, more preferably 7%. In some embodiments, it can comprise about 4%, 4.5%, 5%, 5.5%, 6%, 6.5%, 7%, 7.5% and 8% of $Na_2O$.

In some embodiments, the ratio $(SiO_2+Al_2O_3+Na_2O)/Li_2O$ of the total content $(SiO_2+Al_2O_3+Na_2O)$ of $SiO_2$, $Al_2O_3$ and $Na_2O$ to the content of $Li_2O$ is controlled to be within a range of 7.0-18.0, which is conductive to refining the crystal, improving the fracture toughness of the microcrystalline glass and microcrystalline glass product, and increasing the depth of ion exchange layer and surface stress of the microcrystalline glass product. Therefore, $(SiO_2+Al_2O_3+Na_2O)/Li_2O$ is preferably 7.0-18.0, $(SiO_2+Al_2O_3+Na_2O)/Li_2O$ is more preferably 7.5-15.0, $(SiO_2+Al_2O_3+Na_2O)/Li_2O$ is further preferably 8.5-13.0, and $(SiO_2+Al_2O_3+Na_2O)/Li_2O$ is more further preferably 8.5-11.0. In some embodiments, the value of $(SiO_2+Al_2O_3+Na_2O)/Li_2O$ can be 7.0, 7.3, 7.5, 7.7, 8.0, 8.3, 8.5, 8.7, 9.0, 9.3, 9.5, 9.7, 10.0, 10.3, 10.5, 10.7, 11.0, 11.3, 11.5, 11.7, 12.0, 12.3, 12.5, 12.7, 13.0, 13.3, 13.5, 13.7, 14.0, 14.3, 14.5, 14.7, 15.0, 15.3, 15.5, 15.7, 16.0, 16.3, 16.5, 16.7, 17.0, 17.3, 17.5, 17.7 and 18.0.

$ZrO_2$ can prevent devitrification during glass molding, refine the crystal during crystallization heat treatment, and decrease the haze of the microcrystalline glass and microcrystalline glass product. In the present invention, the lower limit of the $ZrO_2$ content is greater than 5%, preferably above 5.5%, more preferably above 6%. However, if excessive $ZrO_2$ is contained, $ZrO_2$ is not easy to melt in the glass, and it is easy to form stones and weaken the heat treatment devitrification capacity of the glass. Therefore, the upper limit of the content of $ZrO_2$ is 15%, preferably 13%, more preferably 12%. In some embodiments, it can comprise about greater than 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5% and 15% of $ZrO_2$.

In some embodiments, the ratio $SiO_2/ZrO_2$ of the content of $SiO_2$ to the content of $ZrO_2$ is controlled to be within a range of 5.0-15.0, which is conductive to improving the light transmittance and four-point bending strength of the microcrystalline glass and microcrystalline glass product, improving the falling ball test height of the microcrystalline glass product and the body falling ball height of the microcrystalline glass, and preventing the increase of the haze and |B| value. Therefore, $SiO_2/ZrO_2$ is preferably 5.0-15.0, $SiO_2/ZrO_2$ is more preferably 6.0-13.0, $SiO_2/ZrO_2$ is further preferably 6.5-12.0, and $SiO_2/ZrO_2$ is more further preferably 7.0-11.0. In some embodiments, the value of $SiO_2/ZrO_2$ can be 5.0, 5.3, 5.5, 5.7, 6.0, 6.3, 6.5, 6.7, 7.0, 7.3, 7.5, 7.7, 8.0, 8.3, 8.5, 8.7, 9.0, 9.3, 9.5, 9.7, 10.0, 10.3, 10.5, 10.7, 11.0, 11.3, 11.5, 11.7, 12.0, 12.3, 12.5, 12.7, 13.0, 13.3, 13.5, 13.7, 14.0, 14.3, 14.5, 14.7 and 15.0.

In some embodiments, the ratio $(ZrO_2+Al_2O_3)/Li_2O$ of the total content $(ZrO_2+Al_2O_3)$ of $ZrO_2$ and $Al_2O_3$ to the content of $Li_2O$ is controlled to be within a range of 0.85-5.0, which can improve the body falling fall height of the microcrystalline glass, improve the falling ball test height and depth of ion exchange layer of the microcrystalline glass product, and prevent the decrease of light transmittance and crystallinity of the microcrystalline glass and microcrystalline

glass product. Therefore, $(ZrO_2+Al_2O_3)/Li_2O$ is preferably 0.85-5.0, $(ZrO_2+Al_2O_3)/Li_2O$ is more preferably 0.9-4.0, $(ZrO_2+Al_2O_3)/Li_2O$ is further preferably 1.0-3.5, and $(ZrO_2+Al_2O_3)/Li_2O$ is more further preferably 1.0-3.0. In some embodiments, the value of $(ZrO_2+Al_2O_3)/Li_2O$ can be 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9 and 5.0.

In some embodiments, the ratio $(Li_2O+Na_2O)/(SiO_2+ZrO_2)$ of the total content $(Li_2O+Na_2O)$ of $Li_2O$ and $Na_2O$ to the total content $(SiO_2+ZrO_2)$ of $SiO_2$ and $ZrO_2$ is controlled to be within a range of 0.10-0.27, which is conductive to improving the surface stress and depth of ion exchange layer of the microcrystalline glass product, improving the four-point bending strength and hardness of the microcrystalline glass and microcrystalline glass product, and preventing the decrease of fracture toughness and drop resistance of the microcrystalline glass and microcrystalline glass product. Therefore, $(Li_2O+Na_2O)/(SiO_2+ZrO_2)$ is preferably 0.10-0.27, $(Li_2O+Na_2O)/(SiO_2+ZrO_2)$ is more preferably 0.12-0.25, $(Li_2O+Na_2O)/(SiO_2+ZrO_2)$ is further preferably 0.14-0.25, and $(Li_2O+Na_2O)/(SiO_2+ZrO_2)$ is more further preferably 0.15-0.23. In some embodiments, the value of $(Li_2O+Na_2O)/(SiO_2+ZrO_2)$ can be 0.10, 0.11, 0.12, 0.13, 0.14, 0.15, 0.16, 0.17, 0.18, 0.19, 0.20, 0.21, 0.22, 0.23, 0.24, 0.25, 0.26 and 0.27.

$P_2O_5$ can perform non-uniform nucleation in the glass, promote the formation of crystal, and improve the light transmittance of the microcrystalline glass and microcrystalline glass product. In the present invention, the lower limit of the $P_2O_5$ content is 0.5%, preferably 1%, more preferably 1.5%. However, if excessive $P_2O_5$ is contained, it is easy to have direct devitrification during glass molding, and the heat treatment process is not easy to control. Therefore, the upper limit of the content of $P_2O_5$ is 5%, preferably 4.5%, more preferably 4%. In some embodiments, it can comprise about 0.5%, 1%, 1.5%, 2%, 2.5%, 3%, 3.5%, 4%, 4.5% and 5% of $P_2O_5$.

In some embodiments, the ratio $(SiO_2+Li_2O)/(ZrO_2+P_2O_5)$ of the total content $(SiO_2+Li_2O)$ of $SiO_2$ and $Li_2O$ to the total content $(ZrO_2+P_2O_5)$ of $ZrO_2$ and $P_2O_5$ is controlled to be within a range of 4.0-15.5, which can decrease the haze and $|B|$ value of the microcrystalline glass and microcrystalline glass product, improve the drop resistance and hardness of the microcrystalline glass and microcrystalline glass product, and optimize the crystallinity of the microcrystalline glass and microcrystalline glass product. Therefore, $(SiO_2+Li_2O)/(ZrO_2+P_2O_5)$ is preferably 4.0-15.5, $(SiO_2+Li_2O)/(ZrO_2+P_2O_5)$ is more preferably 5.0-13.5, $(SiO_2+Li_2O)/(ZrO_2+P_2O_5)$ is further preferably 6.0-11.5, and $(SiO_2+Li_2O)/(ZrO_2+P_2O_5)$ is more further preferably 6.0-10.5. In some embodiments, the value of $(SiO_2+Li_2O)/(ZrO_2+P_2O_5)$ can be 4.0, 4.3, 4.5, 4.7, 5.0, 5.3, 5.5, 5.7, 6.0, 6.3, 6.5, 6.7, 7.0, 7.3, 7.5, 7.7, 8.0, 8.3, 8.5, 8.7, 9.0, 9.3, 9.5, 9.7, 10.0, 10.3, 10.5, 10.7, 11.0, 11.3, 11.5, 11.7, 12.0, 12.3, 12.5, 12.7, 13.0, 13.3, 13.5, 13.7, 14.0, 14.3, 14.5, 14.7, 15.0, 15.3 and 15.5.

ZnO can decrease the melting temperature of the glass, but excessive content thereof will lead to an increase in the haze of the microcrystalline glass and microcrystalline glass product. Therefore, the content of ZnO is confined to be below 2%, preferably below 1.5%, more preferably below 1%. In some embodiments, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9% and 2% of ZnO.

MgO can decrease the melting temperature of the glass, but excessive content thereof will lead to an increase in the haze of the microcrystalline glass and microcrystalline glass product. Therefore, the content of MgO is confined to be below 2%, preferably below 1.5%, more preferably below 1%. In some embodiments, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9% and 2% of MgO.

$B_2O_3$ can decrease the melting temperature of the glass, increase the content of glass phase in the microcrystalline glass, and facilitate the hot bending of the microcrystalline glass and microcrystalline glass product. However, if excessive $B_2O_3$ is contained in the glass, it is easy to separate phases during crystallization heat treatment, resulting in a decrease in the light transmittance of the microcrystalline glass and microcrystalline glass product. Thus, the content of $B_2O_3$ is 0 to 4%, preferably 0 to 3%, more preferably 0 to 2%. In some embodiments, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9% and 4% of $B_2O_3$.

$K_2O$ can decrease the viscosity of the glass, and promote the growth of crystal during crystallization heat treatment. However, if excessive $K_2O$ is contained, it is easy to make the crystal in the glass grow rapidly and decrease the light transmittance of the microcrystalline glass and microcrystalline glass product. Therefore, the content of $K_2O$ is below 3%, preferably 2%, more preferably below 1%. In some embodiments, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9% and 3% of $K_2O$.

$Ln_2O_3$ ($Ln_2O_3$ is one or more of $La_2O_3$, $Gd_2O_3$, $Y_2O_3$, and $Yb_2O_3$) can decrease the melting difficulty of the glass. In case of excessive content, it will lead to difficulty in crystal formation during glass crystallization, decrease in crystallinity of the microcrystalline glass and microcrystalline glass product, and decrease in body falling ball height of the microcrystalline glass and falling ball test height of the microcrystalline glass product. Therefore, the upper limit of $Ln_2O_3$ is 2%, preferably 1%, more preferably 0.5%, further preferably 0%. In some embodiments, it can comprise about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9% and 2% of $Ln_2O_3$.

In some embodiments, the glass, microcrystalline glass or microcrystalline glass product may also comprise 0-2% of clarifying agent, in order to improve the defoaming capacity of the glass, microcrystalline glass or microcrystalline glass product. Such clarifying agent includes, but is not limited to, one or more of $Sb_2O_3$, $SnO_2$, SnO, $CeO_2$, F (fluorine), Cl (chlorine) and Br (bromine). $Sb_2O_3$ is preferably used as the clarifying agent. When the above clarifying agents exist alone or in combination, the upper limit of the content of the clarifying agent is preferably 1%, more preferably 0.5%. In some embodiments, the content of one or more of the above clarifying agents is about 0%, greater than 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9% and 2%.

PbO and $As_2O_3$ are toxic substances, and even a small amount of PbO and $As_2O_3$ do not meet the environmental protection requirements. Therefore, the present invention preferably comprises 0% of PbO and $As_2O_3$ in some embodiments.

In some embodiments of the present invention, the matrix glass, microcrystalline glass or microcrystalline glass product with colors can be prepared by comprising colorant, so as to make the matrix glass, microcrystalline glass or microcrystalline glass product show different colors, and the colorant comprises: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_5$; and/or 0-4% of $CeO_2$. The weight percentage content and role of the colorant thereof are detailed as follows:

Brown or green matrix glass, microcrystalline glass or microcrystalline glass product prepared by the present invention use NiO, $Ni_2O_3$ or $Pr_2O_5$ as the colorant. NiO and $Ni_2O_3$, as the colorant, are used to prepare the brown or green matrix glass, microcrystalline glass or microcrystalline glass product. Such two components can be used alone or mixed, and their respective content is generally below 4%, preferably below 3%. If the content exceeds 4%, the colorant cannot be well dissolved in the matrix glass, microcrystalline glass or microcrystalline glass product. The lower limit of their respective content is above 0.1%. If the content is less than 0.1%, the color of the matrix glass, microcrystalline glass or microcrystalline glass product is not obvious. In some embodiments, it can comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% and 4.0% of NiO or $Ni_2O_3$. If mixed for use, the total content of NiO and $Ni_2O_3$ is generally below 4%, and the lower limit of the total content is above 0.1%. In some embodiments, it can comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% and 4.0% of NiO or $Ni_2O_3$. $Pr_2O_5$ is used as the colorant of the green matrix glass, microcrystalline glass or microcrystalline glass product. If used alone, the content is generally below 8%, preferably below 6%, and the lower limit of $Pr_2O_5$ content is above 0.4%. If it is less than 0.4%, the color of the matrix glass, microcrystalline glass or microcrystalline glass product is not obvious. In some embodiments, it can comprise about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8% and 8.0% of $Pr_2O_5$.

Blue matrix glass, microcrystalline glass or microcrystalline glass product prepared by the present invention uses CoO or $Co_2O_3$ as the colorant. Such two colorant components can be used alone or mixed, and their respective content is generally below 2%, preferably below 1.8%. If the content exceeds 2%, the colorant cannot be well dissolved in the matrix glass, microcrystalline glass or microcrystalline glass product. The lower limit of their respective content is above 0.05%. If the content is less than 0.05%, the color of the matrix glass, microcrystalline glass or microcrystalline glass product is not obvious. In some embodiments, it can comprise about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9% and 2.0% of CoO or $Co_2O_3$. If mixed for use, the total content of CoO and $Co_2O_3$ is no more than 2%, and the lower limit of the total content is above 0.05%. In some embodiments, it can comprise about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9% and 2.0% of CoO and $Co_2O_3$.

Yellow matrix glass, microcrystalline glass or microcrystalline glass product prepared by the present invention uses $Cu_2O$ or $CeO_2$ as the colorant. Such two colorant components can be used alone or mixed, and the lower limit of their respective content is above 0.5%. If the content is less than 0.5%, the color of the matrix glass, microcrystalline glass or microcrystalline glass product is not obvious. If used alone, $Cu_2O$ is below 4%, preferably below 3%. If the content exceeds 4%, the matrix glass is prone to devitrification. In some embodiments, it can comprise about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% and 4.0% of $Cu_2O$. If used alone, the content of $CeO_2$ is generally below 4%, preferably below 3%. If the content exceeds 4%, gloss of the matrix glass, microcrystalline glass or microcrystalline glass product is not good. In some embodiments, it can comprise about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% and 4.0% of $CeO_2$. Meanwhile, adding a small

amount of $CeO_2$ into the glass has the effect of defoaming. $CeO_2$ in the glass can also be used as the clarifying agent. When it is used as the clarifying agent, the content of $CeO_2$ is below 2%, preferably below 1%, more preferably below 0.5%. If two colorants are mixed for use, the total content thereof is generally below 4%, and the lower limit of the total content is above 0.5%. In some embodiments, it can comprise about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9% and 4.0% of $CeO_2$ and $Cu_2O$.

Black or smoky gray matrix glass, microcrystalline glass or microcrystalline glass product prepared by the present invention uses $Fe_2O_3$ alone as the colorant; or uses a mixture of $Fe_2O_3$ and CoO as the colorant; or uses a mixture of $Fe_2O_3$ and $Co_2O_3$ as the colorant; or uses a mixture of $Fe_2O_3$, CoO and NiO as the colorant; or uses a mixture of $Fe_2O_3$, $Co_2O_3$, and NiO as the colorant. The colorant used to prepare black and smoky gray matrix glass, microcrystalline glass or microcrystalline glass product mainly uses $Fe_2O_3$, and the content is below 7%, preferably below 5%. The lower limit of the content of $Fe_2O_3$ is above 0.2%. In some embodiments, it can comprise about 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.5%, 5.0%, 5.5%, 6.0%, 6.5% and 7.0% of $Fe_2O_3$. CoO and $Co_2O_3$ have absorption in visible light, which can deepen the coloring degree of the matrix glass, microcrystalline glass or microcrystalline glass product. In general, the respective content is below 0.6% when mixed with $Fe_2O_3$ for use, and the lower limit is above 0.2%. In some embodiments, it can comprise about 0.2%, 0.3%, 0.4%, 0.5%, and 0.6% of CoO and/or $Co_2O_3$. NiO has absorption in visible light, which can deepen the coloring degree of the matrix glass, microcrystalline glass or microcrystalline glass product. In general, the content of NiO is below 1% when mixed for use, and the lower limit of the total content is above 0.2%. In some embodiments, it can comprise about 0.2%, 0.3%, 0.4%, 0.5%, 0.6%, 0.7%, 0.8%, 0.9%, and 1.0% of NiO.

Purple matrix glass, microcrystalline glass or microcrystalline glass product prepared by the present invention uses $MnO_2$ as the colorant, and the use content is generally below 4%, preferably below 3%. The lower limit of $MnO_2$ content is above 0.1%. If it is less than 0.1%, the color of the matrix glass, microcrystalline glass or microcrystalline glass product is not obvious. In some embodiments, it can comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, and 4.0% of $MnO_2$.

Pink matrix glass, microcrystalline glass or microcrystalline glass product prepared by the present invention uses $Er_2O_3$ as the colorant, and the use content is generally below 8%, preferably below 6%. Due to low coloring efficiency of rare earth element $Er_2O_3$, when the use content exceeds 8%, it cannot further deepen the color of the matrix glass, microcrystalline glass or microcrystalline glass product, but increase the cost. The lower limit of $Er_2O_3$ content is above 0.4%. If it is less than 0.4%, the color of the matrix glass, microcrystalline glass or microcrystalline glass product is not obvious. In some embodiments, it can comprise about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, and 8.0% of $Er_2O_3$.

Purplish red matrix glass, microcrystalline glass or microcrystalline glass product prepared by the present invention uses $Nd_2O_3$ as the colorant, and the use content is generally below 8%, preferably below 6%. Due to low coloring efficiency of rare earth element $Nd_2O_3$, when the use content exceeds 8%, it cannot further deepen the color of the matrix glass, microcrystalline glass or microcrystalline glass product, but increase the cost. The lower limit of $Nd_2O_3$ content is above 0.4%. If it is less than 0.4%, the color of the matrix glass, microcrystalline glass or microcrystalline glass product is not obvious. In some embodiments, it can comprise about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, and 8.0% of $Nd_2O_3$.

Red matrix glass, microcrystalline glass or microcrystalline glass product prepared by the present invention uses a mixture of $Er_2O_3$, $Nd_2O_3$ and $MnO_2$ as the colorant. In the glass, Er ion has absorption at 400-500nm, Mn ion mainly has absorption at 500nm, and Nd ion mainly has strong absorption at 580nm, and the mixture of such three substances can prepare red matrix glass, microcrystalline glass or microcrystalline glass product. Since $Er_2O_3$ and $Nd_2O_3$ belong to rare earth coloring, the coloring capability is relatively weak. The usage amount of $Er_2O_3$ is within 6%, the usage amount of $Nd_2O_3$ is within 4%, and the usage amount of $MnO_2$ with strong coloring capability is within a range of 2%. The lower limit of the total mixed colorant content is above 0.9%.

The terms "not contained" and "0%" as used herein mean that the compound, molecule or element and the like are not intentionally added to the matrix glass, microcrystalline glass or microcrystalline glass product provided by the present invention as raw materials; however, as raw materials and/or equipment for the production of matrix glass, microcrystalline glass or microcrystalline glass product, there will be some impurities or components that are not intentionally added in small or trace amounts in the final matrix glass, microcrystalline glass or microcrystalline glass product, and this situation also falls within the protection scope of the present invention patent.

In some embodiments of the present invention, the crystalline phase in the microcrystalline glass and microcrystalline glass product comprises lithium monosilicate, which provides high strength for the microcrystalline glass and microcrystalline glass product provided by the present invention, and the fracture toughness of the microcrystalline glass and microcrystalline glass product becomes high; the body falling ball height of the microcrystalline glass and the falling ball test height and four-point bending strength of the microcrystalline glass product become larger. The microcrystalline glass provided by the present invention has excellent chemical strengthening performance, and can be subject to chemical strengthening process treatment in order to obtain excellent mechanical strength. Through rational component design, the microcrystalline glass and microcrystalline glass product provided by the present invention can obtain appropriate grain size, so that the microcrystalline glass and microcrystalline glass product provided by the present invention have high strength. The microcrystalline glass and microcrystalline glass product in the present invention have good crystallinity, so that the microcrystalline glass and microcrystalline glass product provided by the present invention have excellent mechanical performance. Crystallinity herein refers to the degree of crystal integrity. The internal particle arrangement of the crystal with complete crystallization is relatively regular, diffraction line is strong, sharp and symmetrical, and full width at half maximum of diffraction peak is close to the width measured by the instrument; defects like dislocation exist in the crystal with poor crystallinity, which makes the diffraction peaks wide and diffuse. The poorer the crystallinity, the weaker the diffraction capability, and the wider the diffraction peak until it disappears into the background. In some embodiments, the crystallinity of the microcrystalline glass product or microcrystalline glass is above 10%, preferably above 15%, more preferably above 20%.

The grain size and crystalline phase type in the microcrystalline glass or microcrystalline glass product provided by the present invention will affect the haze and light transmittance of the microcrystalline glass or microcrystalline glass product. The smaller the grain size, the higher the light transmittance; the smaller the haze, and the higher the light transmittance. In some embodiments, the haze of the microcrystalline glass product or microcrystalline glass with a thickness of below 1mm is below 0.2%, preferably below 0.17%, more preferably below 0.15%. In some embodiments, the grain size of the microcrystalline glass product or microcrystalline glass is below 50nm, preferably below 40nm, more preferably below 30nm.

In some embodiments, the content of crystalline phase and refractive index in the microcrystalline glass or microcrystalline glass product provided by the present invention affects the | B | value in the microcrystalline glass or microcrystalline glass product. Bluish or yellowish color is observed in the microcrystalline glass or microcrystalline glass product in the visible light range, which affects the optical performance of the product, and it is marked with | B | value in LAB (chromaticity value of substance color). The microcrystalline glass or microcrystalline glass product provided by the present invention shows low | B | value in the visible light range. In some embodiments, the average light | B | value at 400-800nm of the microcrystalline glass product or microcrystalline glass with a thickness of below 1mm is below 1.0, preferably below 0.9, more preferably below 0.8.

In some embodiments, the microcrystalline glass or microcrystalline glass product provided by the present invention shows high transparency in the visible light range (that is, the microcrystalline glass or microcrystalline glass product is transparent). The microcrystalline glass or microcrystalline glass product shows high transmittance in the visible light range. In some embodiments, the average light transmittance at 400-800nm of the microcrystalline glass product or microcrystalline glass with a thickness of below 1mm is preferably above 90.5%. In some preferred embodiments, the light transmittance at 550nm of the microcrystalline glass product or microcrystalline glass with a thickness of below 1mm is preferably above 91.5%.

In some embodiments, antimicrobial component can be added into the matrix glass, microcrystalline glass or microcrystalline glass product. The microcrystalline glass or microcrystalline glass product mentioned herein can be used in applications such as kitchen or catering countertops, where there is a high risk of exposure to harmful bacteria. The antimicrobial component contained in the matrix glass, microcrystalline glass or microcrystalline glass product includes, but is not limited to, Ag, AgO, Cu, CuO, and $Cu_2O$. In some embodiments, the content of the above-mentioned antimicrobial component alone or in combination is below 2%, preferably below 1%.

The matrix glass, microcrystalline glass and microcrystalline glass product provided by the present invention can be produced and manufactured by the following methods:

Formation of matrix glass: mixing raw materials uniformly according to the proportion of components, placing the uniformly mixed raw materials into a crucible made of platinum or quartz, melting in an electric furnace or gas furnace within a temperature range of 1250-1650°C for 5-24 hours according to the melting difficulty of glass composition, stirring to make it uniform, then cooling to an appropriate temperature and casting into a mould, and cooling it slowly to form the matrix glass.

The matrix glass provided by the present invention can be formed by a well-known method.

The matrix glass provided by the present invention is subject to crystallization treatment through crystallization process after molding or molding processing, and crystals are uniformly precipitated inside the glass. The crystallization treatment can be carried out through one stage or two stages, preferably two stages. Perform nucleation process treatment under a first temperature, and then perform crystal growth process treatment under a second temperature that is higher than the nucleation process temperature. The crystallization treatment under the first temperature is called first crystallization treatment, and the crystallization treatment under the second temperature is called second crystallization treatment.

In order to make the microcrystalline glass achieve the desired physico-chemical performance, the crystallization process is preferably as follows:

When the above crystallization treatment is made through one stage, the nucleation process and crystal growth process can be carried out continuously. That is, heating up to a specified crystallization treatment temperature, holding the temperature for a certain time after reaching the crystallization treatment temperature, and then performing cooling. The crystallization treatment temperature is preferably 550-700°C. In order to precipitate the desired crystalline phase, the crystallization treatment temperature is more preferably 580-650°C. The holding time under the crystallization treatment temperature is preferably 0-8 hours, more preferably 1-6 hours.

When the above crystallization treatment is made through two stages, the first temperature is preferably 450-550°C, and the second temperature is preferably 550-700°C. The holding time under the first temperature is preferably 0-24 hours, more preferably 2-15 hours. The holding time under the second temperature is preferably 0-10 hours, more preferably 0.5-6 hours.

The above holding time of 0 hour refers to that the temperature starts to cool down or rise again less than 1 minute after reaching such temperature.

In some embodiments, the matrix glass or microcrystalline glass mentioned herein can be made into a former by a variety of processes, the former includes but is not limited to sheet, and the processes include but are not limited to slit drawing, floating, rolling and other sheet forming processes known in the art. Or the matrix glass or microcrystalline glass can be formed by floating or rolling method known in the art. The former mentioned in the present invention further comprises lens, prism, etc.

For the matrix glass or microcrystalline glass provided by the present invention, methods such as grinding or polishing can be adopted to manufacture sheet-type glass former or microcrystalline glass former, but the method of manufacturing the glass former or microcrystalline glass former is not limited to these methods.

For the matrix glass or microcrystalline glass provided by the present invention, methods such as hot bending or pressing process can be adopted at a certain temperature to manufacture various shapes of glass former or microcrystalline glass former, but are not limited to these methods.

In some embodiments, hot bending process can be adopted to make the glass former or microcrystalline glass former. Said hot bending process refers to placing 2D or 2.5D glass or microcrystalline glass in a mould, performing heating and warm-up, pressing, pressure holding and cooling successively in a hot bending machine, in order to make a 3D curved glass former or microcrystalline glass former.

In some embodiments, the microcrystalline glass former has a 2.5D or 3D structure, that is, the microcrystalline glass former has a non-planar structure. "Non-planar structure" herein refers to that in a 2.5D or 3D shape, at least a portion of the microcrystalline glass former extends outward or along an angle to a plane defined by original and layout configuration of the 2D matrix glass. The 2.5D or 3D microcrystalline glass former formed by the matrix glass may have one or more raised or curved parts.

In some embodiments, combined with the characteristics such as growth of crystalline phase, transformation of crystalline phase in the microcrystalline glass, the manufacturing method of the microcrystalline glass former is a hot bending process method. To be specific, said method comprises precrystallization and thermal processing. The precrystallization mentioned in the present invention is to form the matrix glass into precrystallized glass by controlling the crystallization process, and the crystallinity of said precrystallized glass fails to reach the crystallinity required by the performance index of the target microcrystalline glass former. Then, the precrystallized glass is formed into the microcrystalline glass former by thermal processing.

In some embodiments, the manufacturing method of the microcrystalline glass former comprises the following steps:

1) performing a crystallization heat treatment process once for the matrix glass, comprising heating, heat preservation and nucleation, heating, heat preservation and crystallization, cooling to room temperature, and forming a precrystallized glass;
2) and thermally processing the precrystallized glass to obtain the microcrystalline glass former.

The crystallization heat treatment process mentioned in the present invention comprises nucleating the matrix glass at a certain temperature $T_h$ and time $t_h$, and then performing crystallization at a certain temperature $T_c$ and time $t_c$, wherein the crystallinity of the obtained precrystallized glass fails to reach the crystallinity required by the performance index of the target microcrystalline glass former. The total content of principal crystalline phase ($I_{c1}$) in the crystallinity of the precrystallized glass is calculated by applying XRD test data and Rietveld full-spectrum fitting refinement method. Precrystallization of the present invention is a complete process from the perspective of process, comprising one step of nucleation process, crystallization process of one stage, two stages or three stages and above. It is a complete process from heating, heat preservation, and heating again to heat preservation... and then cooling to room temperature according to the process. Different from the primary crystallization and secondary crystallization... mentioned in some literatures or patents, the present invention is actually only the first-stage crystallization, the second-stage crystallization... in a complete crystallization process. The intermediate process is continuous, and there is no other heating and crystallization process after falling to room temperature.

The thermal processing mentioned in the present invention refers to thermal processing treatment of said precrystallized glass under certain conditions such as temperature, time, and pressure. Said thermal processing comprises more than one thermal processing, and said thermal processing includes but is not limited to pressing, bending or drawing the precrystallized glass under certain conditions such as temperature, time, and pressure. In the process of thermal processing, sometimes the former with complex shape cannot be completed by one thermal processing, and more than twice of thermal processing may be required.

In some embodiments, the manufacturing method of the microcrystalline glass former belongs to hot bending process. To be specific, in some embodiments, the manufacturing method of the microcrystalline glass former comprises the following steps:

1) Heating and warm-up: placing the matrix glass or precrystallized glass or microcrystalline glass into a mould, making the mould pass through each heating site in a hot bending machine successively and stay at each site for a certain time for heat preservation. The temperature of warm-up zone is 400-800°C, pressure is 0.01-0.05MPa, and time is 40-200s. In some embodiments, for the hot bending machine of 5 warm-up sites, the initial temperature rise is generally set steadily at about 500°C, the subsequent sites gradually increase the temperature, the temperature gradient between two adjacent sites gradually narrows from low temperature to high temperature, and temperature difference between the last warm-up site and the first pressing site is within a range of 20°C.

2) Pressing: transferring the mould to a molding site after warm-up, wherein the hot bending machine exerts a certain pressure on the mould, pressure range is 0.1-0.8Mpa, temperature range of the molding site is 600-850°C, and molding time range is 40-200s. The pressure is determined according to the factors such as glass thickness and radian.

3) Pressure holding and cooling: transferring the mould to a cooling site to cool down site by site. The cooling temperature range is controlled to be 750-500°C, the pressure is 0.01-0.05Mpa, and the time is 40-200s.

The microcrystalline glass former adopts hot bending process. In addition to controlling the appearance quality of ordinary high-alumina glass, it is also necessary to control the influence of crystal growth and development on the performance of microcrystalline glass during hot bending. For example, for 3D curved microcrystalline glass used for the housing of display devices or electronic devices, close attention should be paid to the light transmittance after hot bending, haze, | B | value, and uniformity.

The matrix glass, microcrystalline glass and microcrystalline glass product mentioned in the present invention may have any thickness that is reasonably useful.

The microcrystalline glass provided by the present invention can not only improve the mechanical characteristics through crystal precipitation, but also obtain better mechanical performance by forming a compressive stress layer, so as to make the microcrystalline glass product.

In some embodiments, the matrix glass or microcrystalline glass can be processed into sheets, and/or molded (e.g. hole punching, hot bending, etc.), polished and/or swept after setting, and then chemically strengthened by a chemical strengthening process.

The chemical strengthening mentioned in the present invention is ion exchange method. In the process of ion exchange, smaller metal ions in the matrix glass or microcrystalline glass are substituted or "exchanged" by larger metal ions with the same valence state near the matrix glass or microcrystalline glass. The substitution of smaller ions with larger ions can construct the compressive stress in the matrix glass or microcrystalline glass, so as to form the compressive stress layer.

In some embodiments, metal ions belong to monovalent alkali metal ions (such as $Na^+$, $K^+$, $Rb^+$ and $Cs^+$), and the ion exchange is carried out by immersing the matrix glass or microcrystalline glass in the salt bath of at least one molten salt containing larger metal ions. These larger metal ions are used to substitute the smaller metal ions in the matrix glass. Or other monovalent metal ions, such as $Ag^+$, $Tl^+$ and $Cu^+$, can also be used to exchange monovalent ions. One or more ion exchange processes for chemical strengthening of matrix glass or microcrystalline glass may include but are not limited to: immersing in a single salt bath, or immersing in a plurality of salt baths with the same or different composition, and conducting washing and/or annealing between the immersions.

In some embodiments, the matrix glass or microcrystalline glass can have ion exchange by immersing in the salt bath of molten Na salt (e.g. $NaNO_3$) at the temperature of about 350°C-470°C for about 1-36 hours. The temperature range is preferably 380°C-460°C, and the time range is preferably 2-24 hours. In this implementation, Na ion substitutes some Li ions in the matrix glass or microcrystalline glass, so as to form the surface compression layer and show high mechanical performance. In some embodiments, the ion exchange can be carried out by immersing the matrix glass or microcrystalline glass in the salt bath of molten K salt (e.g. $KNO_3$) at the temperature of about 360°C-450°C for 1-36 hours, and the time range is preferably 2-24 hours. In some embodiments, the matrix glass or microcrystalline glass can have ion exchange by immersing in the salt bath of molten K salt and Na salt at the temperature of about 360°C-450°C for 1-36 hours, and the time range is preferably 2-24 hours.

The following methods are adopted to test the performance indexes of the microcrystalline glass and/or microcrystalline glass product and/or matrix glass provided by the present invention:

[Haze]

Use haze tester Minolta CM3600A, prepare samples below 1mm, and test according to GB2410-80 standard.

[Grain size]

It is measured by SEM (scanning electron microscope). The grain size is determined by performing surface treatment of microcrystalline glass in HF acid, spraying gold on the surface of microcrystalline glass, and then scanning the surface under SEM (scanning electron microscope).

[Light transmittance]

The light transmittance mentioned herein is external transmittance, sometimes referred to as transmittance.
The average light transmittance at 400-800nm is measured by processing the sample to be below 1mm and polishing in parallel with the opposite plane, and using Hitachi U-41000 spectrophotometer.
The light transmittance at 550nm is measured by processing the sample to be below 1mm and polishing in parallel with the opposite plane, and using Hitachi U-41000 spectrophotometer.

[Crystallinity]

XRD diffraction peaks are compared with database pattern. Crystallinity is obtained by calculating the proportion of crystalline phase diffraction intensity in the overall pattern intensity, and calibrating internally by using pure quartz crystals.

[Depth of ion exchange layer]

Use glass surface stress gauge SLP-2000 to measure the depth of ion exchange layer.
The calculation is made based on the refractive index of 1.56 and optical elastic constant of 29[(nm/cm)/Mpa] of the sample.

[Surface stress]

Use glass surface stress meter SLP-2000 to measure the surface stress.
The calculation is made based on the refractive index of 1.52 and optical elastic constant of 29[(nm/cm)/Mpa] of the sample.

[Drop resistance]

Use directional drop tester WH-2101 to test the drop resistance. Freely fall from a specified height after loading the same specification of glass products onto a 2D microcrystalline glass product (each piece weighs 20g, with 2 pieces of loads) and laying 60-80 mesh sandpaper on a base, and hit the sample directly onto the sandpaper. The drop resistance refers to the height where no fracture occurs and the impact can be withstood. To be specific, the test starts from a height of 600mm, and the height is changed successively by 700mm, 800mm, 900mm, 1000mm and above in case of no fracture. For the embodiments with "drop resistance", the microcrystalline glass product is taken as the test object. The test data recorded as 2000mm in the embodiment means that even when the microcrystalline glass product with load drops from the height of 2000mm, no fracture occurs and the impact can be withstood. The maximum experimental height of the drop tester WH-2101 is 2000mm.

[Falling ball test height]

Place a 145mm×67mm×0.7mm microcrystalline glass product sample onto a glass bearing fixture, so that a 132g steel ball falls from the specified height. The falling ball test height refers to the maximum falling ball test height where the sample has no fracture and the impact can be withstood. To be specific, the test starts from a falling ball test height of 800mm, and the height is changed successively by 850mm, 900mm, 950mm, 1000mm and above in case of no fracture. For the embodiments with "falling ball test height", the microcrystalline glass product is taken as the test object. The test data recorded as 1000mm in the embodiment means that even when the steel ball drops from the height of 1000mm, the microcrystalline glass product has no fracture and the impact is withstood. The falling ball test height in the present invention is sometimes referred to as falling ball height.

[Body falling ball height]

Place a 145mm×67mm×0.7mm microcrystalline glass sample onto a glass bearing fixture, so that a 32g steel ball falls from the specified height. The body falling ball height refers to the maximum falling ball test height where the sample has no fracture and the impact can be withstood. To be specific, the test starts from a falling ball test height of 500mm, and the height is changed successively by 550mm, 600mm, 650mm, 700mm and above in case of no fracture. For the embodiments with "body falling ball height", the microcrystalline glass is taken as the test object, i.e., the falling ball test height of the microcrystalline glass. The test data recorded as 1000mm in the embodiment means that even when the steel ball drops from the height of 1000mm, the microcrystalline glass has no fracture and the impact is withstood.

[Fracture toughness]

Directly measure the indentation expansion crack size. The specimen specification is 2mm×4mm×20mm. After the specimen is prepared by chamfering, grinding and polishing, apply a 49N force onto the specimen with a Vickers hardness indenter and maintain it for 30s until indentation appears, and then measure the fracture strength by a three-point bending method.

[Four-point bending strength]

Use microcomputer-controlled electronic universal testing machine CMT6502 to test the sample with thickness of below 1mm in accordance with *ASTMC 158-2002*. Four-point bending strength is sometimes referred to as bending strength in the present invention.

[Vickers hardness]

It is expressed by the load (N) when a diamond quadrangular indenter with an opposite plane angle of 136° is pressed into a pyramid-shaped depression on the test surface divided by the surface area ($mm^2$) calculated by the length of the depression. The test load is 100(N), and the holding time is 15 (seconds). Vickers hardness is sometimes referred to as hardness in the present invention.

[ | B | value]

Use Minolta CM-700d to test the B value. The thickness of the sample is below 1mm. Use supporting long calibration tube and short calibration tube to calibrate the instrument zero and whiteboard respectively, then perform an air test with the long tube, and judge the stability and reliability of instrument calibration (B≤0.05). After the instrument calibration is qualified, place a product on the zero-position long tube for testing.

| B | value is the absolute value of B.

[Young's modulus]

The Young's modulus (E) is tested by ultrasonic wave for P-wave velocity and S-wave velocity, and then calculated according to the following formula.

$$E = \frac{4G^2 - 3GV_T{}^2\rho}{G - V_T{}^2\rho}$$

$$G = V_s{}^2\rho$$

Wherein:

E refers to Young's modulus, Pa;
G refers to shear modulus, Pa;
$V_T$ refers to S-wave velocity, m/s;
Vs refers to P-wave velocity, m/s;
$\rho$ refers to glass density, $g/cm^3$.

[Refractive index]

The refractive index ($n_d$) is tested as per the method specified in *GB/T7962.1-2010*.

The microcrystalline glass product provided by the present invention has the properties as below:

1) In some embodiments, the four-point bending strength of the microcrystalline glass product is above 600MPa, preferably above 650MPa, more preferably above 700MPa.

2) In some embodiments, the depth of the ion exchange layer of the microcrystalline glass product is above 80$\mu$m, preferably above 90$\mu$m, more preferably above 100$\mu$m.

3) In some embodiments, the surface stress of the microcrystalline glass product is above 100MPa, preferably above 150MPa, more preferably above 200MPa.

4) In some embodiments, the falling ball test height of the microcrystalline glass product is above 1400mm, preferably above 1500mm, more preferably above 1600mm.

5) In some embodiments, the fracture toughness of the microcrystalline glass product is above $1MPa \cdot m^{1/2}$, preferably above $1.1MPa \cdot m^{1/2}$, more preferably above $1.2MPa \cdot m^{1/2}$.

6) In some embodiments, the Vickers hardness ($H_v$) of the microcrystalline glass product is above $670kgf/mm^2$, preferably above $680kgf/mm^2$, more preferably above $700kgf/mm^2$.

7) In some embodiments, the crystallinity of the microcrystalline glass product is above 10%, preferably above 15%, more preferably above 20%.

8) In some embodiments, the grain size of the microcrystalline glass product is below 50nm, preferably below 40nm, more preferably below 30nm.

9) In some embodiments, the drop resistance of the microcrystalline glass product is above 1500mm, preferably above 1600mm, more preferably above 1800mm.

10) In some embodiments, the haze of the microcrystalline glass product with a thickness of below 1mm is below 0.2%, preferably below 0.17%, more preferably below 0.15%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

11) In some embodiments, the average light transmittance at 400-800nm wavelength of the microcrystalline glass product with a thickness of below 1mm is above 88.0%, preferably above 89.0%, more preferably above 90.0%, further preferably above 90.5%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

12) In some embodiments, the light transmittance at 550nm wavelength of the microcrystalline glass product with a thickness of below 1mm is above 89.0%, preferably above 90.0%, more preferably above 91.0%, further preferably above 91.5%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

13) In some embodiments, the average light | B | value at 400-800nm of the microcrystalline glass product with a thickness of below 1mm is below 1.0, preferably below 0.9, more preferably below 0.8. This thickness is preferably 0.2-1mm, more preferably 0.3-0.9mm, further preferably 0.5-0.8mm, more further preferably 0.55mm or 0.6mm or 0.68mm or 0.7mm or 0.75mm.

The microcrystalline glass provided by the present invention has the properties as below:

1) In some embodiments, the crystallinity of the microcrystalline glass is above 10%, preferably above 15%, more preferably above 20%.

2) In some embodiments, the grain size of the microcrystalline glass is below 50nm, preferably below 40nm, more preferably below 30nm.

3) In some embodiments, the haze of the microcrystalline glass with a thickness of below 1mm is below 0.2%, preferably below 0.17%, more preferably below 0.15%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

4) In some embodiments, the average light transmittance at 400-800nm wavelength of the microcrystalline glass with a thickness of below 1mm is above 87.0%, preferably above 88.0%, more preferably above 88.5%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

5) In some embodiments, the light transmittance at 550nm wavelength of the microcrystalline glass with a thickness of below 1mm is above 89.0%, preferably above 90.0%, more preferably above 90.5%. This thickness is preferably 0.2-1mm, more preferably 0.3-0.9mm, further preferably 0.5-0.8mm, more further preferably 0.55mm or 0.6mm or 0.68mm or 0.7mm or 0.75mm.

6) In some embodiments, the body falling ball height of the microcrystalline glass is above 1700mm, preferably above 1900mm, more preferably above 2000mm.

7) In some embodiments, the average light | B | value at 400-800nm of the microcrystalline glass with a thickness of below 1mm is below 1.0, preferably below 0.9, more preferably below 0.8. This thickness is preferably 0.2-1mm, more preferably 0.3-0.9mm, further preferably 0.5-0.8mm, more further preferably 0.55mm or 0.6mm or 0.68mm or 0.7mm or 0.75mm.

8) In some embodiments, the Vickers hardness ($H_v$) of the microcrystalline glass is above 600kgf/mm$^2$, preferably above 620kgf/mm$^2$, more preferably above 630kgf/mm$^2$.

9) In some embodiments, the refractive index ($n_d$) of the microcrystalline glass is 1.520-1.545.

10) In some embodiments, the Young's modulus (E) of the microcrystalline glass product is 80-100GPa.

The matrix glass provided by the present invention has the properties as below:

1) In some embodiments, the refractive index ($n_d$) of the matrix glass is 1.510-1.530.

Due to the above-mentioned excellent performance, the microcrystalline glass, microcrystalline glass product, matrix glass, glass former, and microcrystalline glass former provided by the present invention can be widely made into glass cover plates or glass components; meanwhile, the microcrystalline glass, microcrystalline glass product, matrix glass, glass former, and microcrystalline glass former provided by the present invention can be applied in electronic devices or display devices, such as mobile phone, watch, computer, and touch screen, and can be used to manufacture protective glass for mobile phone, smart phone, tablet, laptop, PDA, television, personal computer, MTA machine or industrial display, or can be used to manufacture touch screen, protective window, car window, train window, aviation mechanical window, and protective glass of touch screen, or can be used to manufacture hard disk substrate or solar cell substrate, or can be used to manufacture white household appliances, such as refrigerator parts or kitchenware.

Examples

The following non-limiting examples are provided in order to further clearly explain and illustrate the technical solution of the present invention. Many efforts have been made to ensure the accuracy of numerical values (e.g., quantity, temperature) in the examples of the present invention, but some errors and deviations must be considered. The composition itself is given as wt% based on oxide and has been standardized to 100%.

< Examples of matrix glass >

This example obtains the matrix glass with composition shown in Tables 1-2 by the above manufacturing method of matrix glass. In addition, the characteristics of each matrix glass are measured by the test method mentioned in the present invention, and the measurement results are shown in Tables 1-2.

Table 1.

| Examples (wt%) | 1# | 2# | 3# | 4# | 5# | 6# | 7# | 8# | 9# | 10# |
|---|---|---|---|---|---|---|---|---|---|---|
| $SiO_2$ | 66 | 65 | 66.5 | 67 | 67.5 | 68 | 68.5 | 69 | 69.5 | 70 |
| $Al_2O_3$ | 9.3 | 9.7 | 9.5 | 6.5 | 5.5 | 9.5 | 9.5 | 8 | 5 | 6 |
| $Li_2O$ | 9 | 8.8 | 9 | 9 | 9.2 | 8 | 7.5 | 7 | 7 | 7 |
| $ZrO_2$ | 7 | 8.4 | 6.7 | 8.5 | 9.5 | 5.5 | 7 | 6 | 12 | 7.5 |
| $Na_2O$ | 5.5 | 5 | 5.2 | 6 | 5 | 6 | 4.5 | 6.5 | 6.5 | 7 |
| $K_2O$ | 0 | 0 | 0 | 0.5 | 1 | 0 | 0 | 0 | 0 | 0 |
| $P_2O_5$ | 2 | 1.8 | 1.9 | 2 | 1.8 | 2.5 | 3 | 3.5 | 0 | 2 |
| ZnO | 0.2 | 0.3 | 0.2 | 0 | 0.2 | 0 | 0 | 0 | 0 | 0.5 |

(continued)

| Examples (wt%) | 1# | 2# | 3# | 4# | 5# | 6# | 7# | 8# | 9# | 10# |
|---|---|---|---|---|---|---|---|---|---|---|
| MgO | 0.5 | 0.5 | 0.45 | 0 | 0 | 0.2 | 0 | 0 | 0 | 0 |
| $B_2O_3$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Yb_2O_3$ | 0 | 0 | 0 | 0 | 0 | 0 | 0 | 0 | 0 | 0 |
| $Sb_2O_3$ | 0.5 | 0.5 | 0.55 | 0.5 | 0.3 | 0.3 | 0 | 0 | 0 | 0 |
| In total | 100 | 100 | 100 | 100 | 100 | 100 | 100 | 100 | 100 | 100 |
| $SiO_2/ZrO_2$ | 9.4 | 7.7 | 9.9 | 7.9 | 7.1 | 12.4 | 9.8 | 11.5 | 5.8 | 9.3 |
| $(SiO_2+Li_2O)/(ZrO_2+P_2O_5)$ | 8.3 | 7.2 | 8.8 | 7.2 | 6.8 | 9.5 | 7.6 | 8.0 | 6.4 | 8.1 |
| $(SiO_2+Al_2O_3+Na_2O)/Li_2O$ | 9.0 | 9.1 | 9.0 | 8.8 | 8.5 | 10.4 | 11.0 | 11.9 | 11.6 | 11.9 |
| $(ZrO_2+Al_2O_3)/Li_2O$ | 1.8 | 2.1 | 1.8 | 1.7 | 1.6 | 1.9 | 2.2 | 2.0 | 2.4 | 1.9 |
| $(Li_2O+Na_2O)/(SiO_2+ZrO_2)$ | 0.20 | 0.19 | 0.19 | 0.20 | 0.18 | 0.19 | 0.16 | 0.18 | 0.17 | 0.18 |
| Refractive index | 1.5199 | 1.5187 | 1.5206 | 1.5193 | 1.5213 | 1.5219 | 1.5209 | 1.5215 | 1.5206 | 1.5248 |

Table 2.

| Examples (wt%) | 11# | 12# | 13# | 14# | 15# | 16# | 17# | 18# | 19# | 20# |
|---|---|---|---|---|---|---|---|---|---|---|
| $SiO_2$ | 70.5 | 71 | 71.5 | 64 | 63 | 62 | 72 | 73 | 74 | 75 |
| $Al_2O_3$ | 8 | 6 | 10 | 9 | 8 | 8 | 6 | 6 | 6 | 6 |
| $Li_2O$ | 8.5 | 7.5 | 8 | 8.5 | 9 | 5.5 | 7 | 7 | 7 | 6.5 |
| $ZrO_2$ | 6 | 6 | 6 | 9 | 12 | 12 | 7 | 7 | 6.5 | 6.5 |
| $Na_2O$ | 5 | 5.5 | 4.5 | 5.5 | 4 | 8 | 4.5 | 4.5 | 4.5 | 4.5 |
| $K_2O$ | 0 | 0 | 0 | 0 | 0 | 0 | 0.5 | 0 | 0 | 0 |
| $P_2O_5$ | 2 | 4 | 0 | 2 | 0 | 0 | 2 | 2 | 2 | 1.5 |
| ZnO | 0 | 0 | 0 | 1 | 0 | 2 | 0 | 0.5 | 0 | 0 |
| MgO | 0 | 0 | 0 | 1 | 2 | 0 | 0.5 | 0 | 0 | 0 |
| $B_2O_3$ | 0 | 0 | 0 | 0 | 2 | 2.5 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Yb_2O_3$ | 0 | 0 | 0 | 0 | 0 | 0 | 0 | 0 | 0 | 0 |
| $Sb_2O_3$ | 0 | 0 | 0 | 0 | 0 | 0 | 0.5 | 0 | 0 | 0 |
| In total | 100 | 100 | 100 | 100 | 100 | 100 | 100 | 100 | 100 | 100 |
| $SiO_2/ZrO_2$ | 11.8 | 11.8 | 11.9 | 7.1 | 5.3 | 5.2 | 10.3 | 10.4 | 11.4 | 11.5 |
| $(SiO_2+Li_2O)/(ZrO_2+P_2O_5)$ | 9.9 | 7.9 | 13.3 | 6.6 | 6.0 | 5.6 | 8.8 | 8.9 | 9.5 | 10.2 |
| $(SiO_2+Al_2O_3+Na_2O)/Li_2O$ | 9.8 | 11.0 | 10.8 | 9.2 | 8.3 | 14.2 | 11.8 | 11.9 | 12.1 | 13.2 |

(continued)

| Examples (wt%) | 11# | 12# | 13# | 14# | 15# | 16# | 17# | 18# | 19# | 20# |
|---|---|---|---|---|---|---|---|---|---|---|
| $(ZrO_2+Al_2O_3)/Li_2O$ | 1.6 | 1.6 | 2.0 | 2.1 | 2.2 | 3.6 | 1.9 | 1.9 | 1.8 | 1.9 |
| $(Li_2O+Na_2O)/(SiO_2+ZrO_2)$ | 0.18 | 0.17 | 0.16 | 0.19 | 0.17 | 0.18 | 0.15 | 0.14 | 0.14 | 0.13 |
| Refractive index | 1.5233 | 1.5219 | 1.5239 | 1.5242 | 1.5237 | 1.5201 | 1.5222 | 1.5215 | 1.5212 | 1.5227 |

<Examples of microcrystalline glass >

This example obtains the microcrystalline glass with composition shown in Tables 3-4 by the above manufacturing method of microcrystalline glass. In addition, the characteristics of each microcrystalline glass are measured by the test method mentioned in the present invention, and the measurement results are shown in Tables 3-4. The following embodiments show haze, average light transmittance at 400-800nm wavelength, light transmittance at 550nm wavelength, and average light | B | value at 400-800nm, and the thickness of the test sample is 0.7mm.

Table 3.

| Examples (wt%) | 1# | 2# | 3# | 4# | 5# | 6# | 7# | 8# | 9# | 10# |
|---|---|---|---|---|---|---|---|---|---|---|
| $SiO_2$ | 66 | 65 | 66.5 | 67 | 67.5 | 68 | 68.5 | 69 | 69.5 | 70 |
| $Al_2O_3$ | 9.3 | 9.7 | 9.5 | 6.5 | 5.5 | 9.5 | 9.5 | 8 | 5 | 6 |
| $Li_2O$ | 9 | 8.8 | 9 | 9 | 9.2 | 8 | 7.5 | 7 | 7 | 7 |
| $ZrO_2$ | 7 | 8.4 | 6.7 | 8.5 | 9.5 | 5.5 | 7 | 6 | 12 | 7.5 |
| $Na_2O$ | 5.5 | 5 | 5.2 | 6 | 5 | 6 | 4.5 | 6.5 | 6.5 | 7 |
| $K_2O$ | 0 | 0 | 0 | 0.5 | 1 | 0 | 0 | 0 | 0 | 0 |
| $P_2O_5$ | 2 | 1.8 | 1.9 | 2 | 1.8 | 2.5 | 3 | 3.5 | 0 | 2 |
| ZnO | 0.2 | 0.3 | 0.2 | 0 | 0.2 | 0 | 0 | 0 | 0 | 0.5 |
| MgO | 0.5 | 0.5 | 0.45 | 0 | 0 | 0.2 | 0 | 0 | 0 | 0 |
| $B_2O_3$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Yb_2O_3$ | 0 | 0 | 0 | 0 | 0 | 0 | 0 | 0 | 0 | 0 |
| $Sb_2O_3$ | 0.5 | 0.5 | 0.55 | 0.5 | 0.3 | 0.3 | 0 | 0 | 0 | 0 |
| In total | 100 | 100 | 100 | 100 | 100 | 100 | 100 | 100 | 100 | 100 |
| $SiO_2/ZrO_2$ | 9.4 | 7.7 | 9.9 | 7.9 | 7.1 | 12.4 | 9.8 | 11.5 | 5.8 | 9.3 |
| $(SiO_2+Li_2O)/(ZrO_2+P_2O_5)$ | 8.3 | 7.2 | 8.8 | 7.2 | 6.8 | 9.5 | 7.6 | 8.0 | 6.4 | 8.1 |
| $(SiO_2+Al_2O_3+Na_2O)/Li_2O$ | 9.0 | 9.1 | 9.0 | 8.8 | 8.5 | 10.4 | 11.0 | 11.9 | 11.6 | 11.9 |
| $(ZrO_2+Al_2O_3)/Li_2O$ | 1.8 | 2.1 | 1.8 | 1.7 | 1.6 | 1.9 | 2.2 | 2.0 | 2.4 | 1.9 |
| $(Li_2O+Na_2O)/(SiO_2+ZrO_2)$ | 0.20 | 0.19 | 0.19 | 0.20 | 0.18 | 0.19 | 0.16 | 0.18 | 0.17 | 0.18 |
| Crystalline phase | Lithium monosilicate | Lithium monosilicate | Lithium monosilicate | Lithium monosilicate | Lithium monosilicate | Lithium monosilicate | Lithium monosilicate | Lithium monosilicate | Lithium monosilicate | Lithium monosilicate |
| Refractive index | 1.5339 | 1.5284 | 1.5341 | 1.5275 | 1.5308 | 1.5338 | 1.5305 | 1.5316 | 1.5328 | 1.5285 |

(continued)

| Examples (wt%) | 1# | 2# | 3# | 4# | 5# | 6# | 7# | 8# | 9# | 10# |
|---|---|---|---|---|---|---|---|---|---|---|
| Body falling ball height (mm) | 1800 | 1800 | 1800 | 1800 | 1800 | 1700 | 1800 | 1800 | 1800 | 1800 |
| Crystallinity (%) | 25 | 28 | 23 | 30 | 23 | 25 | 28 | 26 | 23 | 25 |
| Grain size (nm) | 27 | 26 | 29 | 26 | 28 | 26 | 26 | 29 | 25 | 26 |
| Vickers hardness (kgf/mm$^2$) | 642 | 646 | 641 | 636 | 643 | 635 | 648 | 652 | 656 | 657 |
| Haze (%) | 0.13 | 0.12 | 0.11 | 0.12 | 0.12 | 0.15 | 0.11 | 0.13 | 0.15 | 0.1 |
| \| B \| value | 0.77 | 0.75 | 0.7 | 0.72 | 0.78 | 0.85 | 0.75 | 0.73 | 0.88 | 0.73 |
| Average light transmittance at 400-800nm (%) | 91.5 | 91.5 | 91.5 | 91.5 | 91.5 | 90.0 | 91.5 | 91.5 | 89.0 | 91.0 |
| Light transmittance at 550nm wavelength (%) | 92.0 | 92.0 | 92.0 | 92.0 | 92.0 | 92.0 | 92.0 | 92.0 | 91.5 | 92.0 |
| Young's modulus (GPa) | 85 | 87 | 83 | 88 | 95 | 93 | 92 | 87 | 90 | 88 |

Table 4.

| Examples (wt%) | 11# | 12# | 13# | 14# | 15# | 16# | 17# | 18# | 19# | 20# |
|---|---|---|---|---|---|---|---|---|---|---|
| $SiO_2$ | 70.5 | 71 | 71.5 | 64 | 63 | 62 | 72 | 73 | 74 | 75 |
| $Al_2O_3$ | 8 | 6 | 10 | 9 | 8 | 8 | 6 | 6 | 6 | 6 |
| $Li_2O$ | 8.5 | 7.5 | 8 | 8.5 | 9 | 5.5 | 7 | 7 | 7 | 6.5 |
| $ZrO_2$ | 6 | 6 | 6 | 9 | 12 | 12 | 7 | 7 | 6.5 | 6.5 |
| $Na_2O$ | 5 | 5.5 | 4.5 | 5.5 | 4 | 8 | 4.5 | 4.5 | 4.5 | 4.5 |
| $K_2O$ | 0 | 0 | 0 | 0 | 0 | 0 | 0.5 | 0 | 0 | 0 |
| $P_2O_5$ | 2 | 4 | 0 | 2 | 0 | 0 | 2 | 2 | 2 | 1.5 |
| $ZnO$ | 0 | 0 | 0 | 1 | 0 | 2 | 0 | 0.5 | 0 | 0 |
| $MgO$ | 0 | 0 | 0 | 1 | 2 | 0 | 0.5 | 0 | 0 | 0 |
| $B_2O_3$ | 0 | 0 | 0 | 0 | 2 | 2.5 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Yb_2O_3$ | 0 | 0 | 0 | 0 | 0 | 0 | 0 | 0 | 0 | 0 |
| $Sb_2O_3$ | 0 | 0 | 0 | 0 | 0 | 0 | 0.5 | 0 | 0 | 0 |
| In total | 100 | 100 | 100 | 100 | 100 | 100 | 100 | 100 | 100 | 100 |
| $SiO_2/ZrO_2$ | 11.8 | 11.8 | 11.9 | 7.1 | 5.3 | 5.2 | 10.3 | 10.4 | 11.4 | 11.5 |
| $(SiO_2+Li_2O)/(ZrO_2+P_2O_5)$ | 9.9 | 7.9 | 13.3 | 6.6 | 6.0 | 5.6 | 8.8 | 8.9 | 9.5 | 10.2 |
| $(SiO_2+Al_2O_3+Na_2O)/Li_2O$ | 9.8 | 11.0 | 10.8 | 9.2 | 8.3 | 14.2 | 11.8 | 11.9 | 12.1 | 13.2 |
| $(ZrO_2+Al_2O_3)/Li_2O$ | 1.6 | 1.6 | 2.0 | 2.1 | 2.2 | 3.6 | 1.9 | 1.9 | 1.8 | 1.9 |
| $(Li_2O+Na_2O)/(SiO_2+ZrO_2)$ | 0.18 | 0.17 | 0.16 | 0.19 | 0.17 | 0.18 | 0.15 | 0.14 | 0.14 | 0.13 |
| Crystalline phase | Lithium monosilicate | Lithium monosilicate | Lithium monosilicate | Lithium monosilicate | Lithium monosilicate | Lithium monosilicate | Lithium monosilicate | Lithium monosilicate | Lithium monosilicate | Lithium monosilicate |
| Refractive index | 1.5275 | 1.5299 | 1.5328 | 1.5288 | 1.5272 | 1.5276 | 1.5305 | 1.5275 | 1.536 | 1.5332 |

(continued)

| Examples (wt%) | 11# | 12# | 13# | 14# | 15# | 16# | 17# | 18# | 19# | 20# |
|---|---|---|---|---|---|---|---|---|---|---|
| Body falling ball height (mm) | 1700 | 1800 | 1800 | 1800 | 1800 | 1900 | 1800 | 1800 | 1800 | 1800 |
| Crystallinity (%) | 24 | 27 | 18 | 21 | 23 | 25 | 13 | 21 | 25 | 23 |
| Grain size (nm) | 27 | 28 | 26 | 27 | 35 | 40 | 25 | 28 | 27 | 35 |
| Vickers hardness (kgf/mm$^2$) | 643 | 646 | 647 | 638 | 649 | 653 | 633 | 638 | 633 | 623 |
| Haze (%) | 0.16 | 0.16 | 0.2 | 0.12 | 0.15 | 0.15 | 0.13 | 0.11 | 0.12 | 0.12 |
| \|B\| value | 0.88 | 0.85 | 0.87 | 0.73 | 0.82 | 0.83 | 0.68 | 0.64 | 0.67 | 0.78 |
| Average light transmittance at 400-800nm (%) | 90.0 | 90.5 | 90.5 | 91.0 | 89.0 | 90.0 | 90.5 | 91.0 | 90.5 | 91.0 |
| Light transmittance at 550nm wavelength (%) | 92.0 | 92.0 | 92.0 | 92.0 | 91.5 | 92.0 | 92.0 | 92.0 | 92.0 | 92.0 |
| Young's modulus (GPa) | 93 | 96 | 89 | 87 | 94 | 85 | 88 | 89 | 90 | 91 |

<Examples of microcrystalline glass product >

This example obtains the microcrystalline glass product with composition shown in Tables 5-6 by the above manufacturing method of microcrystalline glass product. In addition, the characteristics of each microcrystalline glass product are measured by the test method mentioned in the present invention, and the measurement results are shown in Tables 5-6. The following embodiments show haze, average light transmittance at 400-800nm wavelength, light transmittance at 550nm wavelength, and average light | B | value at 400-800nm, and the thickness of the test sample is 0.7mm.

Table 5.

| Examples (wt%) | 1# | 2# | 3# | 4# | 5# | 6# | 7# | 8# | 9# | 10# |
|---|---|---|---|---|---|---|---|---|---|---|
| $SiO_2$ | 66 | 65 | 66.5 | 67 | 67.5 | 68 | 68.5 | 69 | 69.5 | 70 |
| $Al_2O_3$ | 9.3 | 9.7 | 9.5 | 6.5 | 5.5 | 9.5 | 9.5 | 8 | 5 | 6 |
| $Li_2O$ | 9 | 8.8 | 9 | 9 | 9.2 | 8 | 7.5 | 7 | 7 | 7 |
| $ZrO_2$ | 7 | 8.4 | 6.7 | 8.5 | 9.5 | 5.5 | 7 | 6 | 12 | 7.5 |
| $Na_2O$ | 5.5 | 5 | 5.2 | 6 | 5 | 6 | 4.5 | 6.5 | 6.5 | 7 |
| $K_2O$ | 0 | 0 | 0 | 0.5 | 1 | 0 | 0 | 0 | 0 | 0 |
| $P_2O_5$ | 2 | 1.8 | 1.9 | 2 | 1.8 | 2.5 | 3 | 3.5 | 0 | 2 |
| $ZnO$ | 0.2 | 0.3 | 0.2 | 0 | 0.2 | 0 | 0 | 0 | 0 | 0.5 |
| $MgO$ | 0.5 | 0.5 | 0.45 | 0 | 0 | 0.2 | 0 | 0 | 0 | 0 |
| $B_2O_3$ | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Yb_2O_3$ | 0 | 0 | 0 | 0 | 0 | 0 | 0 | 0 | 0 | 0 |
| $Sb_2O_3$ | 0.5 | 0.5 | 0.55 | 0.5 | 0.3 | 0.3 | 0 | 0 | 0 | 0 |
| In total | 100 | 100 | 100 | 100 | 100 | 100 | 100 | 100 | 100 | 100 |
| $SiO_2/ZrO_2$ | 9.4 | 7.7 | 9.9 | 7.9 | 7.1 | 12.4 | 9.8 | 11.5 | 5.8 | 9.3 |
| $(SiO_2+Li_2O)/(ZrO_2+P_2O_5)$ | 8.3 | 7.2 | 8.8 | 7.2 | 6.8 | 9.5 | 7.6 | 8.0 | 6.4 | 8.1 |
| $(SiO_2+Al_2O_3+Na_2O)/Li_2O$ | 9.0 | 9.1 | 9.0 | 8.8 | 8.5 | 10.4 | 11.0 | 11.9 | 11.6 | 11.9 |
| $(ZrO_2+Al_2O_3)/Li_2O$ | 1.8 | 2.1 | 1.8 | 1.7 | 1.6 | 1.9 | 2.2 | 2.0 | 2.4 | 1.9 |
| $(Li_2O+Na_2O)/(SiO_2+ZrO_2)$ | 0.20 | 0.19 | 0.19 | 0.20 | 0.18 | 0.19 | 0.16 | 0.18 | 0.17 | 0.18 |
| Crystalline phase | Lithiu m monos ili-cate | Lithiu m monos ili-cate | Lithiu m monos ili-cate | Lithiu m monos ili-cate | Lithiu m monos ili-cate | Lithiu m monos ili-cate | Lithiu m monos ili-cate | Lithiu m monos ili-cate | Lithiu m monos ili-cate | Lithiu m monos ili-cate |
| Crystallinity (%) | 25 | 28 | 23 | 30 | 23 | 25 | 28 | 26 | 23 | 25 |
| Surface stress (MPa) | 226 | 236 | 269 | 248 | 225 | 205 | 278 | 271 | 250 | 215 |

(continued)

| Examples (wt%) | 1# | 2# | 3# | 4# | 5# | 6# | 7# | 8# | 9# | 10# |
|---|---|---|---|---|---|---|---|---|---|---|
| Depth of ion exchange layer ($\mu$m) | 138 | 145 | 135 | 120 | 118 | 149 | 130 | 137 | 125 | 116 |
| Falling ball test height (mm) | 1600 | 1600 | 1700 | 1600 | 1600 | 1600 | 1600 | 1700 | 1600 | 1700 |
| Drop resistance (mm) | 1800 | 2000 | 1900 | 1800 | 2000 | 1800 | 1900 | 1800 | 2000 | 1800 |
| Fracture toughness (MPa•m$^{1/2}$) | 1.4 | 1.3 | 1.6 | 1.3 | 1.4 | 1.5 | 1.3 | 1.4 | 1.4 | 1.5 |
| Four-point bending strength (MPa) | 712 | 715 | 752 | 710 | 718 | 705 | 708 | 718 | 724 | 723 |
| Grain size (nm) | 27 | 26 | 29 | 26 | 28 | 26 | 26 | 29 | 25 | 26 |
| Vickers hardness (kgf/mm$^2$) | 705 | 723 | 735 | 735 | 705 | 718 | 706 | 745 | 716 | 713 |
| Haze (%) | 0.13 | 0.12 | 0.11 | 0.12 | 0.12 | 0.15 | 0.11 | 0.13 | 0.15 | 0.1 |
| \| B \| value | 0.77 | 0.75 | 0.7 | 0.72 | 0.78 | 0.85 | 0.75 | 0.73 | 0.88 | 0.73 |
| Average light transmittance at 400-800nm (%) | 91.5 | 91.5 | 91.5 | 91.5 | 91.5 | 90.0 | 91.5 | 91.5 | 89.0 | 91.0 |
| Light transmittance at 550nm wavelength (%) | 92.0 | 92.0 | 92.0 | 92.0 | 92.0 | 92.0 | 92.0 | 92.0 | 91.5 | 92.0 |

Table 6.

| Examples (wt%) | 11# | 12# | 13# | 14# | 15# | 16# | 17# | 18# | 19# | 20# |
|---|---|---|---|---|---|---|---|---|---|---|
| $SiO_2$ | 70.5 | 71 | 71.5 | 64 | 63 | 62 | 72 | 73 | 74 | 75 |
| $Al_2O_3$ | 8 | 6 | 10 | 9 | 8 | 8 | 6 | 6 | 6 | 6 |
| $Li_2O$ | 8.5 | 7.5 | 8 | 8.5 | 9 | 5.5 | 7 | 7 | 7 | 6.5 |
| $ZrO_2$ | 6 | 6 | 6 | 9 | 12 | 12 | 7 | 7 | 6.5 | 6.5 |
| $Na_2O$ | 5 | 5.5 | 4.5 | 5.5 | 4 | 8 | 4.5 | 4.5 | 4.5 | 4.5 |
| $K_2O$ | 0 | 0 | 0 | 0 | 0 | 0 | 0.5 | 0 | 0 | 0 |
| $P_2O_5$ | 2 | 4 | 0 | 2 | 0 | 0 | 2 | 2 | 2 | 1.5 |
| $ZnO$ | 0 | 0 | 0 | 1 | 0 | 2 | 0 | 0.5 | 0 | 0 |
| $MgO$ | 0 | 0 | 0 | 1 | 2 | 0 | 0.5 | 0 | 0 | 0 |
| $B_2O_3$ | 0 | 0 | 0 | 0 | 2 | 2.5 | 0 | 0 | 0 | 0 |
| $La_2O_3$ | 0 | 0 | 0 | 0 | 0 | 0 | 0.5 | 0 | 0 | 0 |
| $Gd_2O_3$ | 0 | 0 | 0 | 0 | 0 | 0 | 0 | 0 | 0 | 0 |
| $Y_2O_3$ | 0 | 0 | 0 | 0 | 0 | 0 | 0 | 0 | 0 | 0 |
| $Yb_2O_3$ | 0 | 0 | 0 | 0 | 0 | 0 | 0 | 0 | 0 | 0 |
| $Sb_2O_3$ | 0 | 0 | 0 | 0 | 0 | 0 | 0 | 0 | 0 | 0 |
| In total | 100 | 100 | 100 | 100 | 100 | 100 | 100 | 100 | 100 | 100 |
| $SiO_2/ZrO_2$ | 11.8 | 11.8 | 11.9 | 7.1 | 5.3 | 5.2 | 10.3 | 10.4 | 11.4 | 11.5 |
| $(SiO_2+Li_2O)/(ZrO_2+P_2O_5)$ | 9.9 | 7.9 | 13.3 | 6.6 | 6.0 | 5.6 | 8.8 | 8.9 | 9.5 | 10.2 |
| $(SiO_2+Al_2O_3+Na_2O)/Li_2O$ | 9.8 | 11.0 | 10.8 | 9.2 | 8.3 | 14.2 | 11.8 | 11.9 | 12.1 | 13.2 |
| $(ZrO_2+Al_2O_3)/Li_2O$ | 1.6 | 1.6 | 2.0 | 2.1 | 2.2 | 3.6 | 1.9 | 1.9 | 1.8 | 1.9 |
| $(Li_2O+Na_2O)/(SiO_2+ZrO_2)$ | 0.18 | 0.17 | 0.16 | 0.19 | 0.17 | 0.18 | 0.15 | 0.14 | 0.14 | 0.13 |
| Crystalline phase | Lithium monosilicate | Lithium monosilicate | Lithium monosilicate | Lithium monosilicate | Lithium monosilicate | Lithium monosilicate | Lithium monosilicate | Lithium monosilicate | Lithium monosilicate | Lithium monosilicate |
| Crystallinity (%) | 24 | 27 | 18 | 21 | 23 | 25 | 13 | 21 | 25 | 23 |

28

EP 4 545 499 A1

(continued)

| Examples (wt%) | 11# | 12# | 13# | 14# | 15# | 16# | 17# | 18# | 19# | 20# |
|---|---|---|---|---|---|---|---|---|---|---|
| Surface stress (MPa) | 236 | 247 | 254 | 286 | 187 | 173 | 212 | 210 | 220 | 135 |
| Depth of ion exchange layer (μm) | 144 | 125 | 115 | 115 | 133 | 129 | 110 | 111 | 113 | 125 |
| Falling ball test height (mm) | 1600 | 1600 | 1600 | 1600 | 1600 | 1600 | 1800 | 1600 | 1600 | 1600 |
| Drop resistance (mm) | 1800 | 1800 | 1600 | 1800 | 1800 | 2000 | 1800 | 2000 | 1800 | 1800 |
| Fracture toughness (MPa·m$^{1/2}$) | 1.4 | 1.5 | 1.6 | 1.4 | 1.2 | 1.2 | 1.4 | 1.3 | 1.4 | 1.4 |
| Four-point bending strength (MPa) | 725 | 729 | 715 | 702 | 737 | 729 | 726 | 709 | 708 | 698 |
| Grain size (nm) | 27 | 28 | 26 | 27 | 35 | 40 | 25 | 28 | 27 | 35 |
| Vickers hardness (kgf/mm²) | 705 | 709 | 732 | 715 | 719 | 718 | 728 | 721 | 700 | 685 |
| Haze (%) | 0.16 | 0.16 | 0.2 | 0.12 | 0.15 | 0.15 | 0.13 | 0.11 | 0.12 | 0.12 |
| \|B\| value | 0.88 | 0.85 | 0.87 | 0.73 | 0.82 | 0.83 | 0.68 | 0.64 | 0.67 | 0.78 |
| Average light transmittance at 400-800nm (%) | 90.0 | 90.5 | 90.5 | 91.0 | 89.0 | 90.0 | 90.5 | 91.0 | 90.5 | 91.0 |
| Light transmittance at 550nm wavelength (%) | 92.0 | 92.0 | 92.0 | 92.0 | 91.5 | 92.0 | 92.0 | 92.0 | 92.0 | 92.0 |

Claims

1. A microcrystalline glass product, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$, wherein $(SiO_2+Li_2O)/(ZrO_2+P_2O_5)$ is 4.0-15.5.

2. The microcrystalline glass product according to claim 1, wherein components thereof are represented by weight percentage, further comprising: 0-2% of ZnO; and/or 0-2% of MgO; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

3. A microcrystalline glass product, comprising $SiO_2$, $Al_2O_3$, $Li_2O$, $Na_2O$, $P_2O_5$, and $ZrO_2$, wherein components thereof are represented by weight percentage, $(SiO_2+Li_2O)/(ZrO_2+P_2O_5)$ is 4.0-15.5, and haze of the microcrystalline glass product with a thickness of below 1mm is below 0.2%.

4. The microcrystalline glass product according to claim 3, wherein components thereof are represented by weight percentage, comprising: 60-80% of $SiO_2$; and/or 3-15% of $Al_2O_3$; and/or greater than or equal to 5% but less than 10% of $Li_2O$; and/or 4-8% of $Na_2O$; and/or 0.5-5% of $P_2O_5$; and/or greater than 5% but less than or equal to 15% of $ZrO_2$; and/or 0-2% of ZnO; and/or 0-2% of MgO; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

5. The microcrystalline glass product according to any of claims 1-4, wherein components thereof are represented by weight percentage, and one or more of the following 5 conditions are satisfied:

    1) $SiO_2/ZrO_2$ is 5.0-15.0, preferably 6.0-13.0, more preferably 6.5-12.0, or further preferably 7.0-11.0;
    2) $(SiO_2+Li_2O)/(ZrO_2+P_2O_5)$ is 5.0-13.5, preferably 6.0-11.5, or more preferably 6.0-10.5;
    3) $(SiO_2+Al_2O_3+Na_2O)/Li_2O$ is 7.0-18.0, preferably 7.5-15.0, more preferably 8.5-13.0, or further preferably 8.5-11.0;
    4) $(ZrO_2+Al_2O_3)/Li_2O$ is 0.85-5.0, preferably 0.9-4.0, more preferably 1.0-3.5, or further preferably 1.0-3.0;
    5) $(Li_2O+Na_2O)/(SiO_2+ZrO_2)$ is 0.10-0.27, preferably 0.12-0.25, more preferably 0.14-0.25, or further preferably 0.15-0.23.

6. The microcrystalline glass product according to any of claims 1-4, wherein components thereof are represented by weight percentage, comprising: 62-78% of $SiO_2$, preferably 64-75% of $SiO_2$; and/or 5-12% of $Al_2O_3$, preferably 5-10% of $Al_2O_3$; and/or greater than or equal to 6% but less than 10% of $Li_2O$; and/or 4-7.5% of $Na_2O$, preferably 4.5-7% of $Na_2O$; and/or 1-4.5% of $P_2O_5$, preferably 1.5-4% of $P_2O_5$; and/or 5.5-13% of $ZrO_2$, preferably 6-12% of $ZrO_2$; and/or 0-1.5% of ZnO, preferably 0-1% of ZnO; and/or 0-1.5% of MgO, preferably 0-1% of MgO; and/or 0-3% of $B_2O_3$, preferably 0-2% of $B_2O_3$; and/or 0-2% of $K_2O$, preferably 0-1% of $K_2O$; and/or 0-1% of $Ln_2O_3$, preferably 0-0.5% of $Ln_2O_3$; and/or 0-1% of clarifying agent, preferably 0-0.5% of clarifying agent, and the $Ln_2O_3$ is one or more of $La_2O_3$, $Gd_2O_3$, $Y_2O_3$, and $Yb_2O_3$.

7. The microcrystalline glass product according to any of claims 1-4, wherein the microcrystalline glass product comprises lithium silicate crystalline phase, the lithium silicate crystalline phase has a higher weight percentage than other crystalline phases, the lithium silicate crystalline phase accounts for 5-50% of the microcrystalline glass product by weight percentage, preferably the lithium silicate crystalline phase accounts for 5-40% of the microcrystalline glass product by weight percentage, more preferably the lithium silicate crystalline phase accounts for 10-30% of the microcrystalline glass product by weight percentage.

8. The microcrystalline glass product according to any of claims 1-4, wherein the microcrystalline glass product comprises lithium monosilicate crystalline phase, the lithium monosilicate crystalline phase has a higher weight percentage than other crystalline phases, the lithium monosilicate crystalline phase accounts for 5-50% of the microcrystalline glass product by weight percentage, preferably the lithium monosilicate crystalline phase accounts for 5-40% of the microcrystalline glass product by weight percentage, more preferably the lithium monosilicate crystalline phase accounts for 10-30% of the microcrystalline glass product by weight percentage.

9. The microcrystalline glass product according to any of claims 1-4, wherein the microcrystalline glass product comprises lithium disilicate crystalline phase, the lithium disilicate crystalline phase accounts for below 20% of the microcrystalline glass product by weight percentage, preferably the lithium disilicate crystalline phase accounts for below 10% of the microcrystalline glass product by weight percentage, more preferably the lithium disilicate crystalline phase accounts for below 5% of the microcrystalline glass product by weight percentage, further preferably the lithium disilicate crystalline phase is not contained.

10. The microcrystalline glass product according to any of claims 1-4, wherein the microcrystalline glass product comprises petalite crystalline phase, the petalite crystalline phase accounts for below 15% of the microcrystalline glass product by weight percentage, preferably the petalite crystalline phase accounts for below 10% of the microcrystalline glass product by weight percentage, more preferably the petalite crystalline phase accounts for below 5% of the microcrystalline glass product by weight percentage, further preferably the petalite crystalline phase is not contained.

11. The microcrystalline glass product according to any of claims 1-4, wherein falling ball test height of the microcrystalline glass product is above 1400mm, preferably above 1500mm, more preferably above 1600mm; and/or fracture toughness is above $1MPa \cdot m^{1/2}$, preferably above $1.1MPa \cdot m^{1/2}$, more preferably above $1.2MPa \cdot m^{1/2}$; and/or four-point bending strength is above 600MPa, preferably above 650MPa, more preferably above 700MPa; and/or Vickers hardness is above $670kgf/mm^2$, preferably above $680kgf/mm^2$, more preferably above $700kgf/mm^2$; and/or depth of ion exchange layer is above $80\mu m$, preferably above $90\mu m$, more preferably above $100\mu m$; and/or surface stress is above 100MPa, preferably above 150MPa, more preferably above 200MPa; and/or crystallinity is above 10%, preferably above 15%, more preferably above 20%; and/or grain size is below 50nm, preferably below 40nm, more preferably below 30nm; and/or drop resistance is above 1500mm, preferably above 1600mm, more preferably above 1800mm.

12. The microcrystalline glass product according to any of claims 1-4, wherein the haze of the microcrystalline glass product with a thickness of below 1mm is below 0.2%, preferably below 0.17%, more preferably below 0.15%; and/or average light transmittance at 400-800nm wavelength is above 88.0%, preferably above 89.0%, more preferably above 90.0%, further preferably above 90.5%; and/or light transmittance at 550nm wavelength is above 89.0%, preferably above 90.0%, more preferably above 91.0%, further preferably above 91.5%; and/or average light | B | value of 400-800nm is below 1.0, preferably below 0.9, more preferably below 0.8.

13. The microcrystalline glass product according to claim 12, wherein the thickness of the microcrystalline glass product is 0.2-1mm, preferably 0.3-0.9mm, more preferably 0.5-0.8mm, further preferably 0.55mm or 0.6mm or 0.68mm or 0.7mm or 0.75mm.

14. The microcrystalline glass product according to any of claims 1-4, wherein the microcrystalline glass product comprises colorant.

15. The microcrystalline glass product according to claim 14, wherein the colorant is expressed by weight percentage, comprising: 0-4% of NiO; and/or 0-4% of $Ni_2O_3$; and/or 0-2% of CoO; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

16. A microcrystalline glass, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$, wherein $(SiO_2+Li_2O)/(ZrO_2+P_2O_5)$ is 4.0-15.5.

17. The microcrystalline glass according to claim 16, wherein components thereof are represented by weight percentage, further comprising: 0-2% of ZnO; and/or 0-2% of MgO; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

18. A microcrystalline glass, comprising $SiO_2$, $Al_2O_3$, $Li_2O$, $Na_2O$, $P_2O_5$, and $ZrO_2$, wherein components thereof are represented by weight percentage, $(SiO_2+Li_2O)/(ZrO_2+P_2O_5)$ is 4.0-15.5, and haze of the microcrystalline glass with a thickness of below 1mm is below 0.2%.

19. The microcrystalline glass according to claim 18, wherein components thereof are represented by weight percentage, comprising: 60-80% of $SiO_2$; and/or 3-15% of $Al_2O_3$; and/or greater than or equal to 5% but less than 10% of $Li_2O$; and/or 4-8% of $Na_2O$; and/or 0.5-5% of $P_2O_5$; and/or greater than 5% but less than or equal to 15% of $ZrO_2$; and/or 0-2% of ZnO; and/or 0-2% of MgO; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

20. The microcrystalline glass according to any of claims 16-19, wherein components thereof are represented by weight percentage, and one or more of the following 5 conditions are satisfied:

1) $SiO_2/ZrO_2$ is 5.0-15.0, preferably 6.0-13.0, more preferably 6.5-12.0, or further preferably 7.0-11.0;
2) $(SiO_2+Li_2O)/(ZrO_2+P_2O_5)$ is 5.0-13.5, preferably 6.0-11.5, or more preferably 6.0-10.5;
3) $(SiO_2+Al_2O_3+Na_2O)/Li_2O$ is 7.0-18.0, preferably 7.5-15.0, more preferably 8.5-13.0, or further preferably 8.5-11.0;
4) $(ZrO_2+Al_2O_3)/Li_2O$ is 0.85-5.0, preferably 0.9-4.0, more preferably 1.0-3.5, or further preferably 1.0-3.0;
5) $(Li_2O+Na_2O)/(SiO_2+ZrO_2)$ is 0.10-0.27, preferably 0.12-0.25, more preferably 0.14-0.25, or further preferably 0.15-0.23.

21. The microcrystalline glass according to any of claims 16-19, wherein components thereof are represented by weight percentage, comprising: 62-78% of $SiO_2$, preferably 64-75% of $SiO_2$; and/or 5-12% of $Al_2O_3$, preferably 5-10% of $Al_2O_3$; and/or greater than or equal to 6% but less than 10% of $Li_2O$; and/or 4-7.5% of $Na_2O$, preferably 4.5-7% of $Na_2O$; and/or 1-4.5% of $P_2O_5$, preferably 1.5-4% of $P_2O_5$; and/or 5.5-13% of $ZrO_2$, preferably 6-12% of $ZrO_2$; and/or 0-1.5% of $ZnO$, preferably 0-1% of $ZnO$; and/or 0-1.5% of $MgO$, preferably 0-1% of $MgO$; and/or 0-3% of $B_2O_3$, preferably 0-2% of $B_2O_3$; and/or 0-2% of $K_2O$, preferably 0-1% of $K_2O$; and/or 0-1% of $Ln_2O_3$, preferably 0-0.5% of $Ln_2O_3$; and/or 0-1% of clarifying agent, preferably 0-0.5% of clarifying agent, and the $Ln_2O_3$ is one or more of $La_2O_3$, $Gd_2O_3$, $Y_2O_3$, and $Yb_2O_3$.

22. The microcrystalline glass according to any of claims 16-19, wherein the microcrystalline glass comprises lithium silicate crystalline phase, the lithium silicate crystalline phase has a higher weight percentage than other crystalline phases, the lithium silicate crystalline phase accounts for 5-50% of the microcrystalline glass by weight percentage, preferably the lithium silicate crystalline phase accounts for 5-40% of the microcrystalline glass by weight percentage, more preferably the lithium silicate crystalline phase accounts for 10-30% of the microcrystalline glass by weight percentage.

23. The microcrystalline glass according to any of claims 16-19, wherein the microcrystalline glass comprises lithium monosilicate crystalline phase, the lithium monosilicate crystalline phase has a higher weight percentage than other crystalline phases, the lithium monosilicate crystalline phase accounts for 5-50% of the microcrystalline glass by weight percentage, preferably the lithium monosilicate crystalline phase accounts for 5-40% of the microcrystalline glass by weight percentage, more preferably the lithium monosilicate crystalline phase accounts for 10-30% of the microcrystalline glass by weight percentage.

24. The microcrystalline glass according to any of claims 16-19, wherein the microcrystalline glass product comprises lithium disilicate crystalline phase, the lithium disilicate crystalline phase accounts for below 20% of the microcrystalline glass by weight percentage, preferably the lithium disilicate crystalline phase accounts for below 10% of the microcrystalline glass by weight percentage, more preferably the lithium disilicate crystalline phase accounts for below 5% of the microcrystalline glass by weight percentage, further preferably the lithium disilicate crystalline phase is not contained.

25. The microcrystalline glass according to any of claims 16-19, wherein the microcrystalline glass comprises petalite crystalline phase, the petalite crystalline phase accounts for below 15% of the microcrystalline glass by weight percentage, preferably the petalite crystalline phase accounts for below 10% of the microcrystalline glass by weight percentage, more preferably the petalite crystalline phase accounts for below 5% of the microcrystalline glass by weight percentage, further preferably the petalite crystalline phase is not contained.

26. The microcrystalline glass according to any of claims 16-19, wherein crystallinity of the microcrystalline glass is above 10%, preferably above 15%, more preferably above 20%; and/or grain size is below 50nm, preferably below 40nm, more preferably below 30nm; and/or body falling ball height is above 1700mm, preferably above 1900mm, more preferably above 2000mm; and/or Vickers hardness is above 600kgf/mm$^2$, preferably above 620kgf/mm$^2$, more preferably above 630kgf/mm$^2$; and/or refractive index is 1.520-1.545; and/or Young's modulus is 80-100GPa.

27. The microcrystalline glass according to any of claims 16-19, wherein haze of the microcrystalline glass with a thickness of below 1mm is below 0.2%, preferably below 0.17%, more preferably below 0.15%; and/or average light transmittance at 400-800nm wavelength is above 88.0%, preferably above 89.0%, more preferably above 90.0%, further preferably above 90.5%; and/or light transmittance at 550nm wavelength is above 89.0%, preferably above 90.0%, more preferably above 91.0%, further preferably above 91.5%; and/or average light |B| value of 400-800nm is below 1.0, preferably below 0.9, more preferably below 0.8.

28. The microcrystalline glass according to claim 27, wherein the thickness of the microcrystalline glass is 0.2-1mm, preferably 0.3-0.9mm, more preferably 0.5-0.8mm, further preferably 0.55mm or 0.6mm or 0.68mm or 0.7mm or 0.75mm.

29. The microcrystalline glass according to any of claims 16-19, wherein the microcrystalline glass comprises colorant.

30. The microcrystalline glass according to claim 29, wherein the colorant is expressed by weight percentage, comprising: 0-4% of $NiO$; and/or 0-4% of $Ni_2O_3$; and/or 0-2% of $CoO$; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

31. A matrix glass, wherein components thereof are represented by weight percentage, comprising: 60-80% of $SiO_2$; 3-15% of $Al_2O_3$; greater than or equal to 5% but less than 10% of $Li_2O$; 4-8% of $Na_2O$; 0.5-5% of $P_2O_5$; greater than 5% but less than or equal to 15% of $ZrO_2$, wherein $(SiO_2+Li_2O)/(ZrO_2+P_2O_5)$ is 4.0-15.5.

32. The matrix glass according to claim 37, wherein components thereof are represented by weight percentage, further comprising: 0-2% of $ZnO$; and/or 0-2% of $MgO$; and/or 0-4% of $B_2O_3$; and/or 0-3% of $K_2O$; and/or 0-2% of $Ln_2O_3$; and/or 0-2% of clarifying agent, and the $Ln_2O_3$ is one or more of $La_2O_3$, $Gd_2O_3$, $Y_2O_3$, and $Yb_2O_3$.

33. The matrix glass according to claim 31 or 32, wherein components thereof are represented by weight percentage, and one or more of the following 5 conditions are satisfied:

   1) $SiO_2/ZrO_2$ is 5.0-15.0, $SiO_2/ZrO_2$ is preferably 6.0-13.0, $SiO_2/ZrO_2$ is more preferably 6.5-12.0, and $SiO_2/ZrO_2$ is further preferably 7.0-11.0;
   2) $(SiO_2+Li_2O)/(ZrO_2+P_2O_5)$ is 5.0-13.5, $(SiO_2+Li_2O)/(ZrO_2+P_2O_5)$ is preferably 6.0-11.5, $(SiO_2+Li_2O)/(ZrO_2+P_2O_5)$ is more preferably 6.0-10.5;
   3) $(SiO_2+Al_2O_3+Na_2O)/Li_2O$ is 7.0-18.0, $(SiO_2+Al_2O_3+Na_2O)/Li_2O$ is preferably 7.5-15.0, $(SiO_2+Al_2O_3+Na_2O)/Li_2O$ is more preferably 8.5-13.0, $(SiO_2+Al_2O_3+Na_2O)/Li_2O$ is further preferably 8.5-11.0;
   4) $(ZrO_2+Al_2O_3)/Li_2O$ is 0.85-5.0, $(ZrO_2+Al_2O_3)/Li_2O$ is preferably 0.9-4.0, and $(ZrO_2+Al_2O_3)/Li_2O$ is more preferably 1.0-3.5, $(ZrO_2+Al_2O_3)/Li_2O$ is further preferably 1.0-3.0;
   5) $(Li_2O+Na_2O)/(SiO_2+ZrO_2)$ is 0.10-0.27, $(Li_2O+Na_2O)/(SiO_2+ZrO_2)$ is preferably 0.12-0.25, $(Li_2O+Na_2O)/(SiO_2+ZrO_2)$ is more preferably 0.14-0.25, $(Li_2O+Na_2O)/(SiO_2+ZrO_2)$ is further preferably 0.15-0.23.

34. The matrix glass according to claim 31 or 32, wherein components thereof are represented by weight percentage, comprising: 62-78% of $SiO_2$, preferably 64-75% of $SiO_2$; and/or 5-12% of $Al_2O_3$, preferably 5-10% of $Al_2O_3$; and/or greater than or equal to 6% but less than 10% of $Li_2O$; and/or 4-7.5% of $Na_2O$, preferably 4.5-7% of $Na_2O$; and/or 1-4.5% of $P_2O_5$, preferably 1.5-4% of $P_2O_5$; and/or 5.5-13% of $ZrO_2$, preferably 6-12% of $ZrO_2$; and/or 0-1.5% of $ZnO$, preferably 0-1% of $ZnO$; and/or 0-1.5% of $MgO$, preferably 0-1% of $MgO$; and/or 0-3% of $B_2O_3$, preferably 0-2% of $B_2O_3$; and/or 0-2% of $K_2O$, preferably 0-1% of $K_2O$; and/or 0-1% of $Ln_2O_3$, preferably 0-0.5% of $Ln_2O_3$; and/or 0-1% of clarifying agent, preferably 0-0.5% of clarifying agent, and the $Ln_2O_3$ is one or more of $La_2O_3$, $Gd_2O_3$, $Y_2O_3$, and $Yb_2O_3$.

35. The matrix glass according to claim 31 or 32, wherein refractive index of the matrix glass is 1.510-1.530.

36. The matrix glass according to claim 31 or 32, wherein the matrix glass comprises colorant.

37. The matrix glass according to claim 36, wherein the colorant is expressed by weight percentage, comprising: 0-4% of $NiO$; and/or 0-4% of $Ni_2O_3$; and/or 0-2% of $CoO$; and/or 0-2% of $Co_2O_3$; and/or 0-7% of $Fe_2O_3$; and/or 0-4% of $MnO_2$; and/or 0-8% of $Er_2O_3$; and/or 0-8% of $Nd_2O_3$; and/or 0-4% of $Cu_2O$; and/or 0-8% of $Pr_2O_3$; and/or 0-4% of $CeO_2$.

38. A microcrystalline glass former, comprising the microcrystalline glass according to any of claims 16-30.

39. A glass cover plate, comprising the microcrystalline glass product according to any of claims 1-15, and/or the microcrystalline glass according to any of claims 16-30, and/or the matrix glass according to any of claims 31-37, and/or the microcrystalline glass former according to claim 38.

**40.** A glass component, comprising the microcrystalline glass product according to any of claims 1-15, and/or the microcrystalline glass according to any of claims 16-30, and/or the matrix glass according to any of claims 31-37, and/or the microcrystalline glass former according to claim 38.

**41.** A display device, comprising the microcrystalline glass product according to any of claims 1-15, and/or the microcrystalline glass according to any of claims 16-30, and/or the matrix glass according to any of claims 31-37, and/or the microcrystalline glass former according to claim 38, and/or the glass cover plate according to claim 39, and/or the glass component according to claim 40.

**42.** An electronic device, comprising the microcrystalline glass product according to any of claims 1-15, and/or the microcrystalline glass according to any of claims 16-30, and/or the matrix glass according to any of claims 31-37, and/or the microcrystalline glass former according to claim 38, and/or the glass cover plate according to claim 39, and/or the glass component according to claim 40.

**43.** A manufacturing method of the microcrystalline glass product according to any of claims 1-15, wherein the method comprises the following steps: forming a matrix glass, forming the matrix glass into a microcrystalline glass through a crystallization process, and then forming the microcrystalline glass into a microcrystalline glass product through a chemical strengthening process.

**44.** The manufacturing method of the microcrystalline glass product according to claim 43, wherein the crystallization process comprises the following steps: heating up to a specified crystallization treatment temperature, holding the temperature for a certain time after reaching the crystallization treatment temperature, and then performing cooling, wherein the crystallization treatment temperature is 550-700°C, preferably 580-650°C, and holding time under the crystallization treatment temperature is 0-8 hours, preferably 1-6 hours.

**45.** The manufacturing method of the microcrystalline glass product according to claim 43, wherein the crystallization process comprises the following steps: performing nucleation process treatment under a first temperature, and then performing crystal growth process treatment under a second temperature that is higher than the nucleation process temperature.

**46.** The manufacturing method of the microcrystalline glass product according to claim 45, wherein the crystallization process comprises the following steps: the first temperature is 450-550°C, and the second temperature is 550-700°C; the holding time under the first temperature is 0-24 hours, preferably 2-15 hours; the holding time under the second temperature is 0-10 hours, preferably 0.5-6 hours.

**47.** The manufacturing method of the microcrystalline glass product according to any of claims 43-46, wherein the chemical strengthening process comprises: immersing the microcrystalline glass into a salt bath of molten Na salt at a temperature of 350°C-470°C for 1-36 hours, wherein temperature range is preferably 380°C-460°C, and time range is preferably 2-24 hours; and/or immersing the microcrystalline glass into a salt bath of molten K salt at a temperature of 360°C-450°C for 1-36 hours, wherein the time range is preferably 2-24 hours; and/or immersing the microcrystalline glass into a mixed salt bath of molten K salt and Na salt at a temperature of 360°C-450°C for 1-36 hours, wherein the time range is preferably 2-24 hours.

**48.** The manufacturing method of the microcrystalline glass according to any of claims 16-30, wherein the method comprises the following steps: forming a matrix glass, and then forming the matrix glass into a microcrystalline glass through a crystallization process.

**49.** The manufacturing method of the microcrystalline glass according to claim 48, wherein the crystallization process comprises the following steps: heating up to a specified crystallization treatment temperature, holding the temperature for a certain time after reaching the crystallization treatment temperature, and then performing cooling, wherein the crystallization treatment temperature is 550-700°C, preferably 580-650°C, and holding time under the crystallization treatment temperature is 0-8 hours, preferably 1-6 hours.

**50.** The manufacturing method of the microcrystalline glass according to claim 48,
wherein the crystallization process comprises the following steps: performing nucleation process treatment under a first temperature, and then performing crystal growth process treatment under a second temperature that is higher than the nucleation process temperature.

51. The manufacturing method of the microcrystalline glass according to claim 50, wherein the crystallization process comprises the following steps: the first temperature is 450-550°C, and the second temperature is 550-700°C; the holding time under the first temperature is 0-24 hours, preferably 2-15 hours; the holding time under the second temperature is 0-10 hours, preferably 0.5-6 hours.

52. The manufacturing method of the microcrystalline glass former according to claim 38, wherein the method comprises: grinding or polishing the microcrystalline glass into a microcrystalline glass former, or making the matrix glass or microcrystalline glass into the microcrystalline glass former through hot bending process or pressing process at a certain temperature.

53. The manufacturing method of the microcrystalline glass former according to claim 52, wherein the method comprises the following steps: performing a crystallization heat treatment process once for the matrix glass, including heating, heat preservation and nucleation, heating, heat preservation and crystallization, cooling to room temperature, and forming a precrystallized glass; and thermally processing the precrystallized glass to obtain the microcrystalline glass former.

54. The manufacturing method of the microcrystalline glass former according to claim 52, wherein the method comprises the following steps:

   1) heating and warm-up: placing the matrix glass or precrystallized glass or microcrystalline glass into a mould, making the mould pass through each heating site in a hot bending machine successively and stay at each site for a certain time for heat preservation, wherein temperature of warm-up zone is 400-800°C, pressure is 0.01-0.05MPa, and time is 40-200s;
   2) pressing: transferring the mould to a molding site after warm-up, wherein the hot bending machine exerts a certain pressure on the mould, pressure range is 0.1-0.8Mpa, temperature range of the molding site is 600-850°C, and molding time range is 40-200s;
   3) pressure holding and cooling: transferring the mould to a cooling site to cool down site by site, wherein cooling temperature range is 750-500°C, the pressure is 0.01-0.05Mpa, and the time is 40-200s.

## INTERNATIONAL SEARCH REPORT

| | International application No. |
|---|---|
| | **PCT/CN2023/093852** |

**A.    CLASSIFICATION OF SUBJECT MATTER**

C03C10/04(2006.01)i;  C03C10/12(2006.01)i

According to International Patent Classification (IPC) or to both national classification and IPC

**B.    FIELDS SEARCHED**

Minimum documentation searched (classification system followed by classification symbols)

C03C

Documentation searched other than minimum documentation to the extent that such documents are included in the fields searched

Electronic data base consulted during the international search (name of data base and, where practicable, search terms used)

CNTXT; VEN; ENTXT; ISI; CNKI: 玻璃, 陶瓷, 微晶, 氧化硅, 氧化铝, 氧化锂, 氧化锆, 氧化钠, 五氧化二磷, 硅酸锂, glass, ceramic, microcryatallin, silicon oxide, aluminum oxide, lithium oxide, zirconium oxide, sodium oxide, phosphorus pentoxide, lithium silicate

**C.    DOCUMENTS CONSIDERED TO BE RELEVANT**

| Category* | Citation of document, with indication, where appropriate, of the relevant passages | Relevant to claim No. |
|---|---|---|
| PX | CN 114907016 A (CDGM GLASS CO., LTD.) 16 August 2022 (2022-08-16)<br>  claims 1-54 | 1-54 |
| X | CN 111362579 A (KORNERSTONE MATERIALS TECHNOLOGY CO., LTD.) 03 July 2020 (2020-07-03)<br>  description, paragraphs 47-52 and paragraphs 53-66 and 75, embodiments 7 and 8 | 1-6, 11-21, 26-54 |
| Y | CN 111362579 A (KORNERSTONE MATERIALS TECHNOLOGY CO., LTD.) 03 July 2020 (2020-07-03)<br>  description, paragraphs 47-52 and paragraphs 53-66 and 75, embodiments 7 and 8 | 7-10, 22-25 |
| Y | CN 111757858 A (AGC INC.) 09 October 2020 (2020-10-09)<br>  claims 1 and 6-7 | 7-10, 22-25 |
| Y | CN 107001120 A (CORNING INC.) 01 August 2017 (2017-08-01)<br>  claims 1-5 and 10 | 7-10, 22-25 |
| A | CN 113754290 A (CDGM GLASS CO., LTD.) 07 December 2021 (2021-12-07)<br>  entire document | 1-54 |

☑ Further documents are listed in the continuation of Box C.     ☑ See patent family annex.

| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |
|---|---|
| Date of the actual completion of the international search<br><br>**02 August 2023** | Date of mailing of the international search report<br><br>**10 August 2023** |
| Name and mailing address of the ISA/CN<br><br>**China National Intellectual Property Administration (ISA/CN)**<br>**China No. 6, Xitucheng Road, Jimenqiao, Haidian District, Beijing 100088** | Authorized officer<br><br><br><br><br>Telephone No. |

Form PCT/ISA/210 (second sheet) (July 2022)

**INTERNATIONAL SEARCH REPORT**

| International application No. |
|---|
| **PCT/CN2023/093852** |

**C.    DOCUMENTS CONSIDERED TO BE RELEVANT**

| Category* | Citation of document, with indication, where appropriate, of the relevant passages | Relevant to claim No. |
|---|---|---|
| A | CN 114988704 A (AGC INC.) 02 September 2022 (2022-09-02)<br>entire document | 1-54 |
| A | US 2012321898 A1 (SCHOTT AG et al.) 20 December 2012 (2012-12-20)<br>entire document | 1-54 |
| A | US 2013295523 A1 (DEGUDENT GMBH et al.) 07 November 2013 (2013-11-07)<br>entire document | 1-54 |

Form PCT/ISA/210 (second sheet) (July 2022)

## INTERNATIONAL SEARCH REPORT
### Information on patent family members

| International application No. |
| --- |
| **PCT/CN2023/093852** |

| Patent document cited in search report | | | Publication date (day/month/year) | Patent family member(s) | | | Publication date (day/month/year) |
| --- | --- | --- | --- | --- | --- | --- | --- |
| CN | 114907016 | A | 16 August 2022 | None | | | |
| CN | 111362579 | A | 03 July 2020 | None | | | |
| CN | 111757858 | A | 09 October 2020 | US | 2022064054 | A1 | 03 March 2022 |
| | | | | JPWO | 2019167850 | A1 | 04 February 2021 |
| | | | | JP | 7268673 | B2 | 08 May 2023 |
| | | | | WO | 2019167850 | A1 | 06 September 2019 |
| | | | | US | 2020346969 | A1 | 05 November 2020 |
| | | | | JP | 2023076759 | A | 01 June 2023 |
| CN | 107001120 | A | 01 August 2017 | JP | 2021095334 | A | 24 June 2021 |
| | | | | JP | 7027594 | B2 | 01 March 2022 |
| | | | | JP | 2022059028 | A | 12 April 2022 |
| | | | | US | 2021114919 | A1 | 22 April 2021 |
| | | | | US | 11319244 | B2 | 03 May 2022 |
| | | | | TW | 202037572 | A | 16 October 2020 |
| | | | | TWI | 765234 | B | 21 May 2022 |
| | | | | JP | 2021095333 | A | 24 June 2021 |
| | | | | JP | 7282120 | B2 | 26 May 2023 |
| | | | | US | 2018186686 | A1 | 05 July 2018 |
| | | | | US | 10189741 | B2 | 29 January 2019 |
| | | | | TW | 202003411 | A | 16 January 2020 |
| | | | | TWI | 682912 | B | 21 January 2020 |
| | | | | JP | 2020033262 | A | 05 March 2020 |
| | | | | JP | 6663533 | B2 | 11 March 2020 |
| | | | | KR | 20190128751 | A | 18 November 2019 |
| | | | | KR | 102076605 | B1 | 13 February 2020 |
| | | | | TW | 202124317 | A | 01 July 2021 |
| | | | | EP | 3636610 | A1 | 15 April 2020 |
| | | | | WO | 2016057748 | A1 | 14 April 2016 |
| | | | | KR | 20210008444 | A | 21 January 2021 |
| | | | | KR | 102536351 | B1 | 26 May 2023 |
| | | | | TW | 202124316 | A | 01 July 2021 |
| | | | | EP | 3805169 | A1 | 14 April 2021 |
| | | | | US | 2020002221 | A1 | 02 January 2020 |
| | | | | US | 11168021 | B2 | 09 November 2021 |
| | | | | EP | 3204339 | A1 | 16 August 2017 |
| | | | | EP | 3204339 | B1 | 31 July 2019 |
| | | | | DK | 3572384 | T3 | 04 January 2021 |
| | | | | KR | 20210008445 | A | 21 January 2021 |
| | | | | KR | 102534831 | B1 | 26 May 2023 |
| | | | | US | 2021114920 | A1 | 22 April 2021 |
| | | | | US | 11634357 | B2 | 25 April 2023 |
| | | | | US | 2017144921 | A1 | 25 May 2017 |
| | | | | US | 9809488 | B2 | 07 November 2017 |
| | | | | EP | 3831787 | A1 | 09 June 2021 |
| | | | | TW | 201623179 | A | 01 July 2016 |
| | | | | TWI | 678348 | B | 01 December 2019 |
| | | | | EP | 3831788 | A1 | 09 June 2021 |
| | | | | EP | 3572384 | A2 | 27 November 2019 |
| | | | | EP | 3572384 | A3 | 18 March 2020 |
| | | | | EP | 3572384 | B1 | 18 November 2020 |

Form PCT/ISA/210 (patent family annex) (July 2022)

| INTERNATIONAL SEARCH REPORT<br>Information on patent family members | | | | International application No.<br>**PCT/CN2023/093852** | | |
|---|---|---|---|---|---|---|
| Patent document<br>cited in search report | | Publication date<br>(day/month/year) | Patent family member(s) | | | Publication date<br>(day/month/year) |
| | | | ES | 2840674 | T3 | 07 July 2021 |
| | | | JP | 2020090437 | A | 11 June 2020 |
| | | | JP | 6942210 | B2 | 29 September 2021 |
| | | | TW | 202124318 | A | 01 July 2021 |
| | | | TWI | 752809 | B | 11 January 2022 |
| | | | KR | 20170060156 | A | 31 May 2017 |
| | | | KR | 102106543 | B1 | 29 May 2020 |
| | | | JP | 2020033261 | A | 05 March 2020 |
| | | | JP | 6663532 | B2 | 11 March 2020 |
| | | | KR | 20190128750 | A | 18 November 2019 |
| | | | KR | 102066697 | B1 | 15 January 2020 |
| | | | US | 2020231491 | A1 | 23 July 2020 |
| | | | US | 11148968 | B2 | 19 October 2021 |
| | | | US | 2021101824 | A1 | 08 April 2021 |
| | | | US | 11384010 | B2 | 12 July 2022 |
| | | | KR | 20200015837 | A | 12 February 2020 |
| | | | KR | 102329726 | B1 | 23 November 2021 |
| | | | JP | 2022173512 | A | 18 November 2022 |
| | | | TW | 202003410 | A | 16 January 2020 |
| | | | TWI | 682911 | B | 21 January 2020 |
| | | | KR | 20210008936 | A | 25 January 2021 |
| | | | TW | 202124315 | A | 01 July 2021 |
| | | | JP | 2021014403 | A | 12 February 2021 |
| | | | JP | 7155225 | B2 | 18 October 2022 |
| | | | JP | 2017530933 | A | 19 October 2017 |
| | | | JP | 6675389 | B2 | 01 April 2020 |
| | | | KR | 20200128453 | A | 12 November 2020 |
| | | | KR | 102353905 | B1 | 20 January 2022 |
| | | | TW | 202219006 | A | 16 May 2022 |
| | | | US | 2016102010 | A1 | 14 April 2016 |
| | | | US | 10239780 | B2 | 26 March 2019 |
| | | | EP | 3831786 | A1 | 09 June 2021 |
| | | | US | 2021101825 | A1 | 08 April 2021 |
| | | | US | 11174194 | B2 | 16 November 2021 |
| | | | US | 2019071348 | A1 | 07 March 2019 |
| | | | US | 10427975 | B2 | 01 October 2019 |
| | | | US | 2021002164 | A1 | 07 January 2021 |
| | | | US | 11034610 | B2 | 15 June 2021 |
| | | | JP | 2021100909 | A | 08 July 2021 |
| | | | JP | 7083932 | B2 | 13 June 2022 |
| | | | EP | 3686168 | A1 | 29 July 2020 |
| CN | 113754290 A | 07 December 2021 | US | 2023174413 | A1 | 08 June 2023 |
| | | | KR | 20220140611 | A | 18 October 2022 |
| | | | WO | 2022161118 | A1 | 04 August 2022 |
| | | | TW | 202231596 | A | 16 August 2022 |
| | | | AU | 2022213843 | A1 | 22 September 2022 |
| | | | JP | 2023506666 | A | 17 February 2023 |
| | | | CA | 3173575 | A1 | 04 August 2022 |
| | | | EP | 4105187 | A1 | 21 December 2022 |
| CN | 114988704 A | 02 September 2022 | JPWO | 2020161949 | A1 | 09 December 2021 |

Form PCT/ISA/210 (patent family annex) (July 2022)

INTERNATIONAL SEARCH REPORT

Information on patent family members

International application No.

**PCT/CN2023/093852**

| Patent document cited in search report | | | Publication date (day/month/year) | Patent family member(s) | | | Publication date (day/month/year) |
|---|---|---|---|---|---|---|---|
| | | | | US | 2021347682 | A1 | 11 November 2021 |
| | | | | WO | 2020161949 | A1 | 13 August 2020 |
| | | | | JP | 2022016675 | A | 21 January 2022 |
| | | | | JP | 7067665 | B2 | 16 May 2022 |
| US | 2012321898 | A1 | 20 December 2012 | WO | 2011104035 | A2 | 01 September 2011 |
| | | | | WO | 2011104035 | A9 | 10 November 2011 |
| | | | | WO | 2011104035 | A3 | 05 January 2012 |
| | | | | US | 2016347655 | A1 | 01 December 2016 |
| | | | | US | 10351471 | B2 | 16 July 2019 |
| | | | | KR | 20140027861 | A | 07 March 2014 |
| | | | | KR | 101506378 | B1 | 26 March 2015 |
| | | | | DE | 102010009584 | A1 | 01 September 2011 |
| | | | | DE | 102010009584 | B4 | 08 January 2015 |
| | | | | US | 2019276355 | A1 | 12 September 2019 |
| | | | | JP | 2013520388 | A | 06 June 2013 |
| | | | | JP | 5744068 | B2 | 01 July 2015 |
| US | 2013295523 | A1 | 07 November 2013 | US | 2015376053 | A1 | 31 December 2015 |
| | | | | US | 10442725 | B2 | 15 October 2019 |
| | | | | BR | 112013010186 | A2 | 13 September 2016 |
| | | | | BR | 112013010186 | B1 | 14 December 2021 |
| | | | | BR | 112013010186 | B8 | 17 May 2022 |
| | | | | KR | 20140009166 | A | 22 January 2014 |
| | | | | CA | 2814156 | A1 | 10 May 2012 |
| | | | | CA | 2814156 | C | 03 December 2019 |
| | | | | KR | 20180130591 | A | 07 December 2018 |
| | | | | JP | 2013543831 | A | 09 December 2013 |
| | | | | JP | 5808416 | B2 | 10 November 2015 |
| | | | | US | 9125812 | B2 | 08 September 2015 |
| | | | | RU | 2013114423 | A | 10 December 2014 |
| | | | | RU | 2604601 | C2 | 10 December 2016 |
| | | | | DE | 202011110671 | U1 | 15 December 2015 |
| | | | | DE | 102010050275 | A1 | 03 May 2012 |
| | | | | WO | 2012059143 | A1 | 10 May 2012 |
| | | | | EP | 2635537 | A1 | 11 September 2013 |
| | | | | EP | 2635537 | B1 | 30 November 2022 |
| | | | | AU | 2011325524 | A1 | 11 April 2013 |
| | | | | AU | 2011325524 | B2 | 13 August 2015 |

Form PCT/ISA/210 (patent family annex) (July 2022)